# EUROPEAN PATENT APPLICATION

(11) **EP 4 112 663 A1**
(43) Date of publication of application: **04.01.2023**
(21) Application number: 21761533.5
(22) Date of filing: 26.02.2021
(51) Int. Cl.: C08F 290/06, C09K 9/02, G02B 5/23, C09B 23/14

(54) **PHOTOCHROMIC CURABLE COMPOSITION AND PHOTOCHROMIC OPTICAL ARTICLE**

(30) Priority: 28.02.2020 JP 2020033968
(71) Applicant: Tokuyama Corporation, Shunan-shi, Yamaguchi 745-8648 (JP)
(72) Inventor: MIYAZAKI, Masayuki, Shunan-shi, Yamaguchi 745-8648 (JP); MORI, Katsuhiro, Shunan-shi, Yamaguchi 745-8648 (JP); MOMODA, Junji, Shunan-shi, Yamaguchi 745-8648 (JP)
(74) Representative: Papula Oy
(86) International application number: PCT/JP2021/007323
(87) International publication number: WO 2021/172511

(57) **Abstract**

The present invention provides: a photochromic curable composition which contains (A) a (meth)acrylate composition that contains from 24 to 100% by mass of a polyfunctional (meth)acrylate which has three or more (meth)acryloyl groups in each molecule and (B) a photochromic compound that is obtained by bonding at least one specific naphthopyran to a long-chain group having a number average molecular weight of from 300 to 10,000; and a photochromic optical article which is obtained by polymerizing this photochromic curable composition.

## Description

### TECHNICAL FIELD

The present invention relates to photochromic curable compositions and photochromic optical articles.

### BACKGROUND ART

A photochromic compound such as a naphtopyran compound, a fulgide compound or a spirooxazine compound is a compound which can reversibly take two isomers having different absorption spectra by irradiation with light including ultraviolet rays such as sunlight or mercury lamp light. In general, the photochromic compound has such a property (hereinafter also referred to as a "photochromic property") that when a colorless decolored compound is irradiated with ultraviolet rays, the compound is immediately isomerized (coloring reaction) into a colored state whereas when the compound is put in a dark place after stopping light irradiation, the compound is returned to the original color, and thus by utilization of this property, the photochromic compound is used in various applications, in particular, applications of optical materials.

For example, in recent years the demand is increasing for photochromic spectacle lenses which have the photochromic property by use of the photochromic compound and, when the photochromic spectacle lenses are used outdoors where light including ultraviolet rays such as sunlight is applied, are immediately colored to function as sunglasses, whereas when used indoors where such light is not applied, are decolored to function as ordinary transparent eyeglasses.

In general, in order to provide the photochromic property to optical articles, the photochromic compound and a plastic resin are used together, and specifically, the following methods are known:
(a) a method of mixing the photochromic compound with a polymerizable monomer to polymerize the mixture and thereby directly molding an optical article such as a lens;
(b) a method of providing, by coating or casting polymerization on the surface of a plastic molded article such as a lens, a resin layer in which the photochromic compound is dispersed; and
(c) a method of joining two optical sheets with an adhesive layer formed of a resin composition in which the photochromic compound is dispersed.

Among them in particular, as disclosed in Patent Document 1, a coating method of applying a photochromic curable composition on a plastic lens by spin coat or the like and light-curing it to form a photochromic coating layer is an effective means because the coating method is applicable to various existing lenses.

Incidentally, among photochromic compounds used in photochromic optical articles, a photochromic compound which is returned to the original colorless state not only by interruption of light having specific wavelengths but also by heating when being isomerized (decoloring reaction) from a colored state into a decolored state is referred to as a T-type photochromic compound. The T-type photochromic compound has been well studied as a material for photochromic lenses. The following properties are generally required for the T-type photochromic compound.
(1) The degree of coloring (hereinafter also referred to as "initial coloring") in a visible light region before irradiation with ultraviolet rays is low.
(2) A rate at which a coloring density reaches saturation after the start of irradiation with ultraviolet rays is high (that is, coloring sensitivity is high).
(3) A rate (hereinafter referred to as a decoloring rate) at which the compound is returned to the original state after stopping irradiation with ultraviolet rays is high.
(4) Durability for repetition of a reversible reaction is satisfactory.
(5) A high concentration of the compound is dissolved in a monomer composition serving as a host material after being cured so that dispersibility in the host material used is increased.

As the photochromic compound which satisfies these properties, a larger number of chromene compounds have been studied. In recent years, the requirements for photochromic spectacles have become more sophisticated, and for example, temperature dependence is required to be reduced.

It is generally known that the decoloring rate and the coloring density of the T-type photochromic compound are in a trade-off relationship. Hence, it is known that the T-type photochromic compound is easily affected by an ambient environment temperature (highly dependent on temperature), and, for example, when the T-type photochromic compound is used at a high temperature such as in summer with strong sunlight, a decoloring reaction easily occurs and thus the coloring density is lowered. Therefore, in particular it is required to develop photochromic lenses which have the property of having a high coloring density even at a high temperature such as in summer (hereinafter, the property of having a high coloring density even at a high temperature may also be referred to as having "low temperature dependence").

In general, in order to obtain a high coloring density at a high temperature, it is necessary to improve the thermal stability of the photochromic compound in a colored state, that is, to provide the photochromic compound having a low decoloring rate. Hence, it is generally difficult to achieve both the property described in (3) above and the property of having low temperature dependence. The present inventors have proposed a chromene compound which has a substituent at a specific position to reduce its temperature dependence (see Patent Document 2). Although in this compound, the temperature dependence can be relatively decreased, since the compound has a substituent at a specific position, its color tone is restricted, and there is room for further improvement in the decoloring rate of a solid matrix.

In a solid matrix, a structural change caused by the isomerization of a photochromic compound is restricted, and thus in general, a decoloring rate is easily lowered. Hence, it is considered that in order to improve the decoloring rate, the glass transformation temperature of the solid matrix (polymer) is lowered to soften a base material or a free space in the matrix is expanded. However, although the solid matrix having a low glass transformation temperature and the matrix having an expanded free space are used, and thus it is possible to provide an environment where a structural change in the photochromic compound is easily caused, since a crosslink density is not sufficient, the solid matrix is highly dependent on temperature, and thus a photochromic property is highly dependent on temperature, with the result that it is impossible to satisfy a sophisticated photochromic property required in recent years. Moreover, the strength and hardness of photochromic lenses are insufficient, and thus when a photochromic property is provided by a coating method, there is still room for improvement in that, for example, a photochromic compound is eluted when a hard coat layer is formed on a photochromic coat layer.

As another method for improving the decoloring rate in the solid matrix, it is considered that a photochromic compound having an oligomer chain group (see Patent Documents 3 to 5) is used. However, for the photochromic compound having an oligomer chain group, compatibility with the solid matrix used is important, and, there is room for improvement in that, for example, the solid matrix used is limited due to the fact that when the compatibility is low, the solid matrix becomes clouded. Furthermore, when a photochromic property is developed with a thin film, for example, by the coating method, though it is necessary to add a high concentration of the photochromic compound, since the concentration of the photochromic compound in molecules is lowered by the oligomer chain group, it is necessary to add a higher concentration thereof, with the result that, for example, the hardness of a photochromic coat layer is significantly lowered disadvantageously.

Patent Document 1: PCT International Publication No. WO2011/125956
Patent Document 2: Japanese Unexamined Patent Application, Publication No. 2018-062496
Patent Document 3: PCT International Publication No. WO2004/041961
Patent Document 4: PCT International Publication No. WO2000/015630
Patent Document 5: PCT International Publication No. WO2019/013249

### DISCLOSURE OF THE INVENTION

### Problems to be Solved by the Invention

As described above, further improvement is needed to satisfy the sophisticated photochromic property required in recent years (in particular, the reduction of temperature dependence), and further improvement is also needed for the strength and hardness of a host material such as a resin.

Hence, an object of the present invention is to provide a photochromic curable composition which achieves sufficient strength and hardness and a sophisticated photochromic property and a photochromic optical article using such a photochromic curable composition.

### Means for Solving the Problems

The present inventors have conducted a thorough study in order to solve the problem described above. Consequently, the present inventors have found to be able to solve the problem by using not only a photochromic compound having an oligomer chain group but also a specific host material, with the result that the present invention has been completed.

Specifically, a photochromic curable composition according to the present invention includes:
(A) a (meth)acrylate composition in which a content of a polyfunctional (meth)acrylate having three or more (meth)acryloyl groups within a molecule is 24 to 100% by mass; and
(B) a photochromic compound in which at least one naphthopyran represented by formula (1) below is bonded to a long chain group having a number average molecular weight of 300 to 10000: 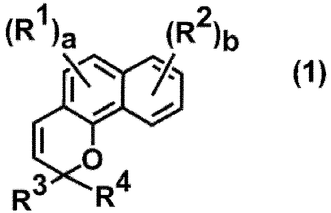 in the formula,
   R¹ and R² each independently represent a group bonded to the long chain group having a number average molecular weight of 300 to 10000, a hydroxy group, an alkyl group, a haloalkyl group, a cycloalkyl group optionally having a substituent, an alkoxy group, an amino group, a substituted amino group, a heterocyclic group optionally having a substituent, a cyano group, a halogen atom, an alkylthio group, an arylthio group optionally having a substituent, a nitro group, a formyl group, a hydroxycarbonyl group, an alkylcarbonyl group, an alkoxycarbonyl group, an aralkyl group optionally having a substituent, an aralkoxy group optionally having a substituent, an aryloxy group optionally having a substituent, an aryl group optionally having a substituent, a heteroaryl group optionally having a substituent, a thiol group, an alkoxyalkylthio group, a haloalkylthio group or a cycloalkylthio group optionally having a substituent,
   a represents an integer of 0 to 2 and b represents an integer of 0 to 4,
   when the a is 2, a plurality of R¹s may be identical to or different from each other,
   when the a is 2 and adjacent R¹s are present, the two adjacent R¹s may form, together with carbon atoms to which each R¹ is bonded, a ring which may include an oxygen atom, a sulfur atom or a nitrogen atom, and the ring may further have a substituent,
   when the b is 2 to 4, a plurality of R²s may be identical to or different from each other,
   when the b is 2 to 4 and adjacent R²s are present, the two adjacent R²s may form, together with carbon atoms to which each R² is bonded, a ring which may include an oxygen atom, a sulfur atom or a nitrogen atom, and the ring may further have a substituent,
   when neither the a nor the b is 0, at least one R¹ and at least one R² may form a ring, and the ring may further have a substituent,
   R³ and R⁴ each independently represent a group bonded to the long chain group having a number average molecular weight of 300 to 10000, an aryl group optionally having a substituent or a heteroaryl group optionally having a substituent and at least one selected from R¹, R², R³ and R⁴ is a group bonded to the long chain group having a number average molecular weight of 300 to 10000.

A photochromic optical article according to the present invention is formed by polymerizing the photochromic curable composition according to the present invention.

### Effects of the Invention

According to the present invention, it is possible to provide a photochromic curable composition which realizes sufficient strength and hardness and a sophisticated photochromic property and a photochromic optical article using such a photochromic curable composition.

### BRIEF DESCRIPTION OF THE DRAWINGS

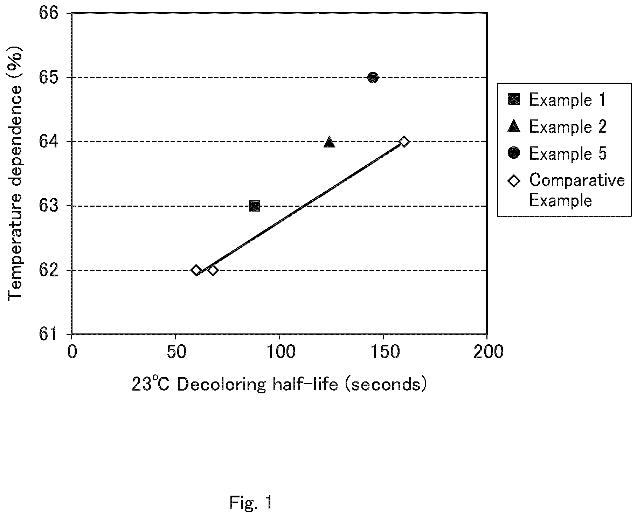

FIG. 1 is a diagram showing a relationship between temperature dependence and a decoloring half-life in the compounds of Examples and Comparative Example.

### PREFERRED MODE FOR CARRYING OUT THE INVENTION

### «Photochromic curable composition»

A photochromic curable composition according to the present embodiment contains: (A) a (meth)acrylate composition (hereinafter also referred to as an "A component") in which the content of a polyfunctional (meth)acrylate having three or more (meth)acryloyl groups within a molecule is 24 to 100% by mass; and (B) a photochromic compound (hereinafter also referred to as a "B component") in which at least one specific naphthopyran is bonded to a long chain group having a number average molecular weight of 300 to 10000. By using the photochromic curable composition described above, it is possible to obtain a photochromic optical article having sufficient strength and hardness and a sophisticated photochromic property. The present inventors consider the reason why such an effect is obtained as follows.

Specifically, by using a host material obtained by polymerizing the (meth)acrylate composition in which the content of the polyfunctional (meth)acrylate having three or more (meth)acryloyl groups within a molecule is 24 to 100% by mass, it is possible to realize the sufficient strength and hardness of a solid matrix. In general, in such a solid matrix, a free space is not sufficiently formed and thus the photochromic property is unlikely to be developed, but in the photochromic compound in which at least one naphthopyran is bonded to a long chain group having a number average molecular weight of 300 to 10000, an environment where a structural change is easily caused only in the vicinity of the long chain group can be formed, with the result that it is considered to be possible to realize the sufficient strength and hardness while holding the environment where a structural change is easily caused. Furthermore, since the crosslink density of the solid matrix obtained is high, the temperature dependence of the solid matrix is reduced, and thus it is possible to keep the temperature dependence of the photochromic property low, with the result that it is possible to provide a photochromic optical article having a high coloring density even at a high temperature such as in summer.

The term "(meth)acryloyl group" means both an "acryloyl group" and a "methacryloyl group". The same is true for the other terms such as "(meth)acrylate".

### <(A) (Meth)acrylate composition>

The (meth)acrylate composition serving as the A component is not particularly limited, and a known polyfunctional (meth)acrylate may be used singly or a combination of a known polyfunctional (meth)acrylate and another polymerizable monomer may be used. In general, preferably, (A1) a polyfunctional (meth)acrylate having three or more (meth)acryloyl groups within a molecule (hereinafter also referred to as an "A1 component") and (A2) a bifunctional (meth)acrylate (hereinafter also referred to as an "A2 component") are combined to be used, and are, as necessary, combined with (A3) a monofunctional (meth)acrylate (hereinafter also referred to as an "A3 component") or (A4) a polymerizable monomer other than (A1) to (A3) (hereinafter also referred to as an "A4 component") to be used. Various types of compounds used as the A component will be described in detail below.

### [A1 component]

As long as the A1 component is a polyfunctional (meth)acrylate having three or more (meth)acryloyl groups within a molecule, the A1 component is not particularly limited, and a polyfunctional (meth)acrylate represented by formula (3) below, a polyfunctional (meth)acrylate having a urethane bond and a polyfunctional (meth)acrylate other than those described above are preferably used.

### ((A1-1) Polyfunctional (meth)acrylate represented by formula (3) below)

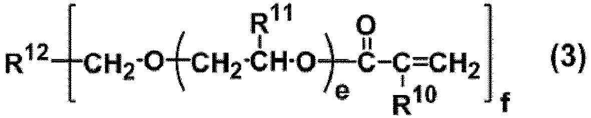

In the formula, R¹⁰ represents a hydrogen atom or a methyl group, R¹¹ represents a hydrogen atom or an alkyl group having 1 or 2 carbon atoms, R¹² represents a trivalent to hexavalent organic group having 1 to 10 carbon atoms, e represents, as an average value, a number of 0 to 3 and f represents an integer of 3 to 6. As the alkyl group having 1 or 2 carbon atoms represented by R¹¹, a methyl group is preferable. Examples of the organic group represented by R¹² include a group derived from polyol, a trivalent to hexavalent hydrocarbon group, a trivalent to hexavalent organic group having a urethane bond and the like.

Specific examples of the polyfunctional (meth)acrylate represented by the formula (3) described above include trimethylolpropane trimethacrylate, trimethylolpropane triacrylate, tetramethylolmethane trimethacrylate, tetramethylolmethane triacrylate, tetramethylolmethane tetramethacrylate, tetramethylolmethane tetraacrylate, trimethylolpropane triethyleneglycol trimethacrylate, trimethylolpropane triethyleneglycol triacrylate, ethoxylated pentaerythritol tetraacrylate, ethoxylated pentaerythritol tetramethacrylate, ditrimethylol propanetetramethacrylate, ditrimethylol propanetetraacrylate, dipentaerythritol hexamethacrylate, dipentaerythritol hexaacrylate and the like.

### ((A1-2) Polyfunctional (meth)acrylate having a urethane bond)

(A1-2) The polyfunctional (meth)acrylate having a urethane bond is obtained by causing a polyisocyanate compound having two or more isocyanate groups within a molecule, a polyol compound having two or more hydroxy groups within a molecule and a hydroxy group-containing (meth)acrylate to react with each other, and has three or more (meth)acryloyl groups in a molecule.

Specific examples of the polyisocyanate compound having two or more isocyanate groups within a molecule include hexamethylene diisocyanate, isophorone diisocyanate, lysine isocyanate, 2,2,4-hexamethylene diisocyanate, dimerate diisocyanate, isopropylidenebis-4-cyclohexylisocyanate, dicyclohexylmethane diisocyanate, norbornene diisocyanate, methylcyclohexane diisocyanate and the like.

Specific examples of the polyol compound having two or more hydroxy groups within a molecule include glycerin, trimethylolpropane, pentaerythritol, dipentaerythritol and the like.

As the polyfunctional (meth)acrylate having a urethane bond, a commercially available product can also be used. Examples of the commercially available product include U-4HA (molecular weight: 596, the number of functional groups: 4), U-6HA (molecular weight: 1019, the number of functional groups: 6), U-6LPA (molecular weight: 818, the number of functional groups: 6) and U-15HA (molecular weight: 2300, the number of functional groups: 15) made by SHIN-NAKAMURA CHEMICAL Co., Ltd.

### ((A1-3) Polyfunctional (meth)acrylate other than those described above)

Examples of (A1-3) the polyfunctional (meth)acrylate other than those described above include: a compound in which an end of a polyester compound is modified with a (meth)acryloyl group; and the like. Various polyester (meth)acrylate compounds corresponding to the molecular weight of the polyester compound serving as a raw material and the amount of modification of the (meth)acryloyl group are commercially available, and these commercially available polyester (meth)acrylate compounds can be used. Specific examples of the polyester (meth)acrylate compound include a tetrafunctional polyester oligomer (molecular weight: 2500 to 3500, made by DAICEL-ALLNEX LTD., such as EB80), a hexafunctional polyester oligomer (molecular weight: 6000 to 8000, made by DAICEL-ALLNEX LTD., such as EB450), a hexafunctional polyester oligomer (molecular weight: 45000 to 55000, made by DAICEL-ALLNEX LTD., such as EB1830), a tetrafunctional polyester oligomer (molecular weight: 10000, made by DKS Co. Ltd., such as GX8488B) and the like.

By using the A1 components illustrated above, it is possible to maintain the photochromic property and improve the strength and hardness.

The A1 components individually described above may be used singly or two or more types may be combined to be used. The components individually described above may be combined to be used. When a plurality of types of A1 components are combined to be used, the standard mass of the A1 component is the total amount thereof.

Among the A1 components described above, trimethylolpropane trimethacrylate, ditrimethylolpropane tetramethacrylate and dipentaerythritol hexaacrylate are preferable.

### [A2 component]

As long as the A2 component is a bifunctional (meth)acrylate, the A2 component is not particularly limited, and a bifunctional (meth)acrylate represented by formula (4), (5) or (6) below, a bifunctional (meth)acrylate having a urethane bond and a bifunctional (meth)acrylate other than those described above are preferably used.

### ((A2-1) Bifunctional (meth)acrylate represented by formula (4) below)

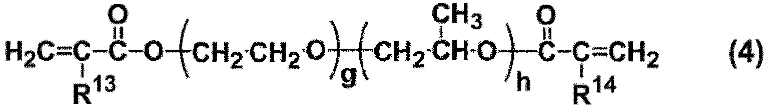

In the formula, R¹³ and R¹⁴ each independently represent a hydrogen atom or a methyl group, g and h each independently represent an integer of 0 or more and g + h is an integer of 2 or more. The bifunctional (meth)acrylate represented by the formula (4) described above is often obtained as a mixture in manufacturing. Hence, g + h represents, as an average value, a number of 2 or more, and preferably represents, as an average value; a number of 2 to 50.

Specific examples of the bifunctional (meth)acrylate represented by the formula (4) described above include diethylene glycol dimethacrylate, triethylene glycol dimethacrylate, tetraethylene glycol dimethacrylate, pentaethylene glycol dimethacrylate, pentapropylene glycol dimethacrylate, diethylene glycol diacrylate, triethylene glycol diacrylate, tetraethylene glycol diacrylate, pentaethylene glycol diacrylate, tripropylene glycol diacrylate, tetrapropylene glycol diacrylate, pentapropylene glycol diacrylate, a mixture of polypropylene glycol dimethacrylate and polyethylene glycol dimethacrylate (having repeating units of two polyethylenes and two polypropylenes), polyethylene glycol dimethacrylate (in particular, g=4, h=0, average molecular weight: 330), polyethylene glycol dimethacrylate (in particular, g=9, h=0, average molecular weight: 536), polyethylene glycol dimethacrylate (in particular, g=14, h=0, average molecular weight: 736), tripropylene glycol dimethacrylate, tetrapropylene glycol dimethacrylate, polypropylene glycol dimethacrylate (in particular, g=0, h=7, average molecular weight: 536), polyethylene glycol diacrylate (in particular, average molecular weight: 258), polyethylene glycol diacrylate (in particular, g=4, h=0, average molecular weight: 308), polyethylene glycol diacrylate (in particular, g=9, h=0, average molecular weight: 508), polyethylene glycol diacrylate (in particular, g=14, h=0, average molecular weight: 708), polyethylene glycol methacrylate acrylate (in particular, g=9, h=0, average molecular weight: 522) and the like.

### ((A2-2) Bifunctional (meth)acrylate represented by formula (5) below)

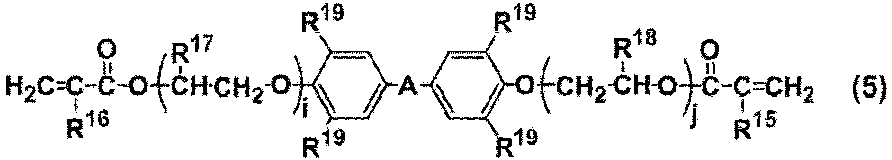

In the formula, R¹⁵ and R¹⁶ each independently represent a hydrogen atom or a methyl group, R¹⁷ and R¹⁸ each independently represent a hydrogen atom or a methyl group, R¹⁹ represents a hydrogen atom or a halogen atom and A represents -O-, -S-, - (SO₂)-, -CO-, -CH₂-, -CH=CH-, -C(CH₃)₂- or -C(CH₃) (C₆H₅)-. i and j each independently represent an integer of 1 or more, and i + j represents, as an average value, a number of 2 to 30. The bifunctional (meth)acrylate represented by the formula (5) described above is generally obtained as a mixture of molecules having different molecular weights. Hence, i + j is represented as an average value.

Specific examples of the bifunctional (meth)acrylate represented by the formula (5) described above include 2,2-bis[4-(methacryloyloxyethoxy)phenyl]propane (i + j = 2, average molecular weight: 452), 2,2-bis[4-(methacryloyloxydiethoxy)phenyl]propane (i + j = 4, average molecular weight: 540), 2,2-bis[4-(methacryloyloxypolyethoxy)phenyl]propane (i + j = 7, average molecular weight: 672), 2,2-bis[3,5-dibromo-4-(methacryloyloxyethoxy)phenyl]propane (i + j = 2, average molecular weight: 768), 2,2-bis(4-(methacryloyloxydipropoxy)phenyl)propane (i + j = 4, average molecular weight: 596), 2,2-bis[4-(acryloyloxydiethoxy)phenyl]propane (i + j = 4, average molecular weight: 512), 2,2-bis[4-(acryloyloxypolyethoxy)phenyl]propane (i + j = 3, average molecular weight: 466), 2,2-bis[4-(acryloyloxypolyethoxy)phenyl]propane (i + j = 7, average molecular weight: 642), 2,2-bis[4-(methacryloyloxypolyethoxy)phenyl]propane (i + j = 10, average molecular weight: 804), 2,2-bis[4-(methacryloylxipolyethoxy)phenyl]propane (i + j = 17, average molecular weight: 1116), 2,2-bis[4-(methacryloylxipolyethoxy)phenyl]propane (i + j = 30, average molecular weight: 1684), 2,2-bis[4-(acryloylxipolyethoxy)phenyl]propane (i + j = 10, average molecular weight: 776), 2,2-bis[4-(acryloylxipolyethoxy)phenyl]propane (i + j = 20, average molecular weight: 1216) and the like.

### ((A2-3) Bifunctional (meth)acrylate represented by formula (6) below)

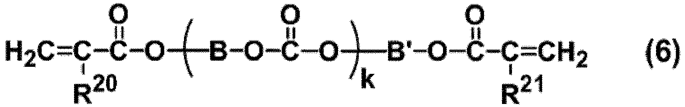

In the formula, R²⁰ and R²¹ each independently represent a hydrogen atom or a methyl group, k represents, as an average value, a number of 1 to 20 and B and B' each independently represent a linear or branched alkylene group having 2 to 15 carbon atoms. When a plurality of Bs are present, each of the Bs may be the same group or a different group.

The bifunctional (meth)acrylate represented by the formula (6) described above can be manufactured by causing polycarbonate diol and (meth)acrylic acid to react with each other.

Specific examples of the polycarbonate diol include polycarbonate diol obtained by phosgenation of trimethylene glycol (average molecular weight: 500 to 2000), polycarbonate diol obtained by phosgenation of tetramethylene glycol (average molecular weight: 500 to 2000), polycarbonate diol obtained by phosgenation of pentamethylene glycol (average molecular weight: 500 to 2000), polycarbonate diol obtained by phosgenation of hexamethylene glycol (average molecular weight: 500 to 2000), polycarbonate diol obtained by phosgenation of octamethylene glycol (average molecular weight: 500 to 2000), polycarbonate diol obtained by phosgenation of nonamethylene glycol (average molecular weight: 500 to 2000), polycarbonate diol obtained by phosgenation of triethylene glycol and tetramethylene glycol (average molecular weight: 500 to 2000), polycarbonate diol obtained by phosgenation of tetramethylene glycol and hexamethylene glycol (average molecular weight: 500 to 2000), polycarbonate diol obtained by phosgenation of pentamethylene glycol and hexamethylene glycol (average molecular weight: 500 to 2000), polycarbonate diol obtained by phosgenation of tetramethylene glycol and octamethylene glycol (average molecular weight: 500 to 2000), polycarbonate diol obtained by phosgenation of hexamethylene glycol and octamethylene glycol (average molecular weight: 500 to 2000), polycarbonate diol obtained by phosgenation of 1-methyltrimethylene glycol (average molecular weight: 500 to 2000) and the like.

### ((A2-4) Bifunctional (meth)acrylate having a urethane bond)

As (A2-4) the bifunctional (meth)acrylate having a urethane bond, a bifunctional (meth)acrylate obtained by causing a polyisocyanate compound having two or more isocyanate groups within a molecule, a polyol compound having two or more hydroxy groups within a molecule and a hydroxy group-containing (meth)acrylate to react with each other is preferable.

Specific examples of the polyisocyanate compound having two or more isocyanate groups within a molecule include hexamethylene diisocyanate, isophorone diisocyanate, lysine isocyanate, 2,2,4-hexamethylene diisocyanate, dimerate diisocyanate, isopropylidenebis-4-cyclohexylisocyanate, dicyclohexylmethane diisocyanate, norbornene diisocyanate, methylcyclohexane diisocyanate and the like.

Specific examples of the polyol compound having two or more hydroxy groups within a molecule include polyalkylene glycol having repeating units of ethylene oxide, propylene oxide or hexamethylene oxide; polyester diol such as polycaprolactone diol; polycarbonate diol, polybutadiene diol, pentaerythritol, ethylene glycol, propylene glycol, 1,3-propanediol, 1,4-butanediol, 1,5-pentanediol, 1,6-hexanediol, 1,9-nonanediol, 1,8-nonandiol, neopentyl glycol, diethylene glycol, dipropylene glycol, 1,4-cyclohexanediol, 1,4-cyclohexanedimethanol, glycerin, trimethylol propane and the like.

As the bifunctional (meth)acrylate having a urethane bond, a mixture resulting from the reaction of urethane prepolymer which is obtained by causing the polyisocyanate compound and the polyol compound to react with each other and in which an end of a molecule is an isocyanate group and 2-hydroxy (meth) acrylate, urethane (meth)acrylate serving as a mixture obtained by directly causing the A1 component described above and 2-hydroxy (meth)acrylate to react with each other and the like.

Specific examples of the hydroxy group-containing (meth)acrylate include 2-hydroxyethyl (meth)acrylate, 2-hydroxypropyl (meth)acrylate, 3-hydroxypropyl (meth)acrylate, 3-hydroxybutyl (meth)acrylate, 4-hydroxybutyl (meth) acrylate and the like.

As the bifunctional (meth)acrylate having a urethane bond, a commercially available product can also be used. Examples of the commercially available product include U-2PPA (molecular weight: 482), UA-122P (molecular weight: 1100) and U-122P (molecular weight: 1100) made by SHIN-NAKAMURA CHEMICAL Co., Ltd., EB4858 (molecular weight: 454) made by DKS Co. Ltd. and the like.

### ((A2-5) Bifunctional (meth)acrylate other than those described above)

Examples of (A2-5) the bifunctional (meth)acrylate other than those described above include a compound which may have a substituent and has a (meta)acryloyl group at both ends of an alkylene group. Among them, a compound which has an alkylene group having 6 to 20 carbon atoms is preferable. Specific examples thereof include 1,6-hexanediol diacrylate, 1,6-hexanediol dimethacrylate, 1,9-nonanediol diacrylate, 1,9-nonanediol dimethacrylate, 1,10-decanediol diacrylate, 1,10-decanediol dimethacrylate and the like.

As the bifunctional (meth)acrylate other than those described above, a bifunctional (meth)acrylate containing a sulfur atom can also be mentioned. Preferably, a sulfur atom forms, as a sulfide group, part of a molecular chain. Specific examples thereof include bis(2-methacryloyloxyethyl thioethyl) sulfide, bis(methacryloyloxyethyl) sulfide, bis(acryloyloxyethyl) sulfide, 1,2-bis(methacryloyloxyethylthio) ethane, 1,2-bis(acryloyloxyethyl) ethane, bis(2-methacryloyloxyethylthioethyl) sulfide, bis(2-acryloyloxyethylthioethyl) sulfide, 1,2-bis(methacryloyloxyethylthioethylthio) ethane, 1,2-bis(acryloyloxy ethylthioethylthio) ethane, 1,2-bis(methacryloyloxyisopropylthioisopropyl) sulfide, 1,2-bis(acryloyloxyisopropylthioisopropyl) sulfide and the like.

The A2 components individually described above may be used singly or two or more types may be combined to be used. The components individually described above may be combined to be used. When a plurality of types of A2 components are combined to be used, the standard mass of the A2 component is the total amount thereof.

Among the A2 components described above, polyethylene glycol dimethacrylate (in particular, g=4, h=0, average molecular weight: 330), polyethylene glycol dimethacrylate (in particular, g=9, h=0, average molecular weight: 536), polyethylene glycol dimethacrylate (in particular, g=14, h=0, average molecular weight: 736), 2,2-bis[4-(methacryloyloxypolyethoxy)phenyl]propane (i + j = 7, average molecular weight: 672), 2,2-bis[4-methacloylxipolyethoxy)phenyl]propane (i + j = 10, average molecular weight: 804), 2,2-bis[4-(methacryloylxipolyethoxy)phenyl]propane (i + j = 17, average molecular weight: 1116), 2,2-bis[4-(acryloyloxypolyethoxy)phenyl]propane (i + j = 7, average molecular weight: 642), 2,2-bis[4-(acryloyloxypolyethoxy)phenyl]propane (i + j = 10, average molecular weight:: 776) and 2,2-bis[4-(acryloylxipolyethoxy)phenyl]propane (i + j = 20, average molecular weight 1216) are preferable.

### [A3 component]

As long as the A3 component is a monofunctional (meth)acrylate, the A3 component is not particularly limited, and a monofunctional (meth)acrylate represented by formula (7) below is preferably used.

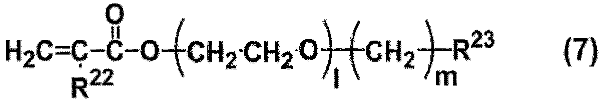

In the formula, R²² represents a hydrogen atom or a methyl group, R²³ represents a hydrogen atom, a methyldimethoxysilyl group, a trimethoxysilyl group or a glycidyl group, 1 represents an integer of 0 to 10 and m represents an integer of 0 to 20.

Specific examples of the monofunctional (meth)acrylate represented by the formula (7) described above include methoxypolyethylene glycol methacrylate (in particular, average molecular weight: 293), methoxypolyethylene glycol methacrylate (in particular, average molecular weight: 468), methoxypolyethylene glycol acrylate (in particular, average molecular weight: 218), methoxypolyethylene glycol acrylate, (in particular, average molecular weight: 454), stearyl methacrylate, lauryl methacrylate, methyl acrylate, ethyl acrylate, butyl acrylate, octyl acrylate, lauryl acrylate, γ-methacryloyloxypropyl trimethoxysilane, γ-methacryloyloxypropyl methyldimethoxysilane, glycidyl methacrylate and the like.

Among the A3 components described above, γ-methacryloyloxypropyl trimethoxysilane, γ-methacryloyloxypropyl methyldimethoxysilane and glycidyl methacrylate are preferable.

### [A4 component]

As long as the A4 component is another radical polymerizable monomer, the A4 component is not particularly limited, and radical polymerizable polyrotaxane, a radical polymerizable silsesquioxane compound, an allyl compound and a vinyl compound are preferably used.

### ((A4-1) Radical polymerizable polyrotaxane)

(A4-1) The radical polymerizable polyrotaxane has a composite molecular structure which includes an axis molecule and a plurality of cyclic molecules including the axis molecule, and the polyrotaxane in which a side chain having a hydroxy group is introduced into the cyclic molecule has a radical polymerizable group where 1 mol% or more and less than 100 mol% of the hydroxy group in the side chain is modified with a compound having a radical polymerization property. In the present specification, as described above, a reaction in which the hydroxy group in the side chain is caused to react with another compound to introduce a structure derived the compound is also referred to as "modification".

Polyrotaxane has a composite molecular structure formed with a chain axis molecule and cyclic molecules. Specifically, the axis molecule is included in a plurality of cyclic molecules, and the axis molecule penetrates the interiors of the rings of the cyclic molecules. Although the cyclic molecules can freely slide on the axis molecule, bulky end groups are formed at both ends of the axis molecule, and thus the cyclic molecules are prevented from dropping off the axis molecule.

Various axis molecules of polyrotaxane are known. For example, as long as the axis molecule can penetrate the ring of the cyclic molecule, the axis molecule may be linear or branched, and a linear or branched polymer is generally used.

Specific examples of the polymer forming the axis molecule include polyvinyl alcohol, polyvinylpyrrolidone, a cellulosic resin (such as carboxymethyl cellulose, hydroxyethyl cellulose or hydroxypropyl cellulose), polyacrylamide, polyethylene oxide, polyethylene glycol, polypropylene glycol, polyvinyl acetal, polyvinyl methyl ether, polyamine, polyethyleneimine, casein, gelatin, starch, an olefin resin (such as polyethylene or polypropylene), polyester, polyvinyl chloride, a styrene resin (such as polystyrene or an acrylonitrile-styrene copolymer resin), an acrylic resin (such as poly(meth)acrylic acid, polymethylmethacrylate, polymethylacrylate or an acrylonitrile-methyl acrylate copolymer resin), polycarbonate, polyurethane, a vinyl chloride-vinyl acetate copolymer resin, polyvinyl butyral, polyisobutylene, polytetrahydrofuran, polyaniline, an acrylonitrile-butadiene-styrene ternary polymer resin (ABS resin), polyamide (such as nylon), polyimide, polydiene (such as polyisoprene or polybutadiene), polysiloxane (such as polydimethylsiloxane), polysulfone, polyimine, polyanhydrous acetic acid, polyurea, polysulfide, polyphosphazene, polyketone polyphenylene, polyhaloolefin and the like. These polymers may be copolymerized or denatured as necessary.

Among them, polyethylene glycol, polyisobutylene, polyisobutylene, polybutadiene, polypropylene glycol, polytetrahydrofuran, polydimethylsiloxane, polyethylene, polypropylene, polyvinyl alcohol and polyvinylmethyl ether are preferable, and polyethylene glycol is more preferable.

Although the bulky groups formed at both ends of the axis molecule are not particularly limited as long as the bulky groups prevent the cyclic molecules from dropping off the axis molecule, an adamantyl group, a trityl group, a fluoresceinyl group, a dinitrophenyl group and a pyrenyl group are preferable in terms of bulkiness, and an adamantyl group is more preferable in terms of ease of introduction.

Although the mass-average molecular weight (Mw) of the axis molecule is not particularly limited, when the mass-average molecular weight (Mw) is excessively large, compatibility with other components (for example, another polymerizable monomer) tends to be lowered whereas when the mass-average molecular weight (Mw) is excessively small, the mobility of the cyclic molecule is lowered and thus the photochromic property tends to be lowered. From this point of view, the mass-average molecular weight of the axis molecule preferably falls within a range of 1000 to 100000, more preferably falls within a range of 5000 to 80000 and further preferably falls within a range of 8000 to 50000. The mass-average molecular weight described above is the value which is measured by a GPC measurement method which will be described later in Examples.

The cyclic molecule has the ring which is large enough to include the axis molecule. Examples of the ring as described above include a cyclodextrin ring, a crown ether ring, a benzocrown ring, a dibenzocrown ring, a dicyclohexanocrown ring and the like, and the cyclodextrin ring is preferable. As the types of cyclodextrin ring, α body (ring inner diameter: 0.45 to 0.6 nm), β body (ring inner diameter: 0.6 to 0.8 nm) and γ body (ring inner diameter: 0.8 to 0.95 nm) are present, and the α-cyclodextrin ring and the γ-cyclodextrin ring are preferable, and the α-cyclodextrin ring is more preferable.

In general, a plurality of cyclic molecules is included in one axis molecule. When the maximum inclusion number of cyclic molecules which can include one axis molecule is assumed to be 1.0, the inclusion number of cyclic molecules generally falls within a range of 0.001 to 0.6, preferably falls within a range of 0.002 to 0.5 and more preferably falls within a range of 0.003 to 0.4.

The maximum inclusion number of cyclic molecules for one axis molecule can be calculated from the length of the axis molecule and the thickness of the ring of the cyclic molecule. For example, when a case where the axis molecule is formed of polyethylene glycol and the cyclic molecule is the α-cyclodextrin ring is used as an example, the maximum inclusion number is calculated as follows. Specifically, two repeating units [-CH₂-CH₂O-] of polyethylene glycol are approximated to the thickness of one α-cyclodextrin ring. Hence, the number of repeating units is calculated from the molecular weight of this polyethylene glycol, and a half of the number of repeating units is determined as the maximum inclusion number of cyclic molecules. This maximum inclusion number is assumed to be 1.0, and the inclusion number of cyclic molecules is adjusted within the range described above.

The polyrotaxane having a radical polymerizable group is manufactured using polyrotaxane (hereinafter also referred to as "side chain hydroxy group-containing polyrotaxane") in which a side chain having a hydroxy group is introduced into the cyclic molecule described above. The side chain as described above is introduced into the ring, and thus it is possible to more reliably form an appropriate space between axis molecules adjacent to each other. Hence, it is possible to reliably acquire a gap which can allow the reversible reaction of photochromic compound molecules, with the result that a superior photochromic property can be developed. The side chain as described above forms a pseudo cross-linked structure in the polyrotaxane, and thus it is possible to improve the photochromic property of a photochromic resin layer.

Preferably, the side chain has a hydroxy group, and is formed by the repetition of an organic chain having 3 to 20 carbon atoms. The average molecular weight of the side chain as described above preferably falls within a range of 200 to 10000, more preferably falls within a range of 250 to 8000, further preferably falls within a range of 300 to 5000 and particularly preferably falls within a range of 300 to 1500. When the side chain is excessively small, the function of acquiring a gap which can allow the reversible reaction of photochromic compound molecules tends to be insufficient. On the other hand, when the side chain is excessively large, there is a tendency for it to be difficult to closely mix the photochromic compound described later with the polyrotaxane and thereby to sufficiently utilize a space acquired by the polyrotaxane. The average molecular weight of the side chain can be adjusted by the amount of side chain used at the time of introduction, and can be determined by calculation or can be determined by the measurement of ¹H-NMR.

The side chain described above can be introduced by utilizing a functional group included in the cyclic molecule and modifying this functional group. For example, the α-cyclodextrin ring has 18 hydroxy groups as functional groups, and the side chains can be introduced through the hydroxy groups described above. In other words, a maximum of 18 side chains can be introduced into one α-cyclodextrin ring. In order for the function of the side chains described above to be sufficiently achieved, 6% or more of the total number of functional groups included in the rings, in particular, 30% or more thereof is preferably modified with the side chains.

The functional group included in the cyclic molecule may affect compatibility with other components, and in particular when the functional group is a hydroxy group, the functional group significantly affects compatibility with other components. Hence, the percentage (degree of modification) of the functional groups modified is preferably 6 to 80%, and more preferably 30 to 70%. Since the functional group of the cyclic molecule is less reactive than the hydroxy group included in the side chain, even when the degree of modification is low, it is unlikely that the compatibility is lowered, or a problem such as bleed out occurs. Hence, if the degree of modification falls within the range described above, superior effects are achieved. When the side chains are bonded to 9 out of 18 hydroxy groups in the α-cyclodextrin ring, the degree of modification is 50%.

As long as the side chain described above is an organic chain having a hydroxy group, the side chain may be linear or branched. By utilization of ring-opening polymerization, radical polymerization, cationic polymerization anionic polymerization, living radical polymerization such as atom transfer radical polymerization, RAFT polymerization or NMP polymerization or the like, a compound capable of introducing a hydroxy group is caused to react with the functional group of the cyclic molecule, and thus an organic chain having a desired hydroxy group can also be introduced as the side chain. Among them, with consideration given to ease of introduction of the side chain, ease of adjustment of the size (molecular weight) of the side chain, the modification of a hydroxy group using a compound having a radical polymerizable group and the like, it is preferable to adopt a method of using the ring-opening polymerization to introduce the side chain derived from a cyclic compound. It is also preferable to introduce the side chain having a hydroxy group at an end.

As the cyclic compound used in the ring-opening polymerization, cyclic ether or a lactone compound is preferably used in terms of ease of availability, high reactivity, and ease of adjustment of the size (molecular weight). By using the cyclic ether or the lactone compound, it is possible to introduce a hydroxy group to an end of the side chain. Specific examples of the preferred cyclic ether and lactone compound are as follows.

Specific examples of the cyclic ether include ethylene oxide, 1,2-propylene oxide, epichlorohydrin, epibromohydrin, 1,2-butylene oxide, 2,3-butylene oxide, isobutylene oxide, oxetane, 3-methyloxetane, 3,3-dimethyloxetane, tetrahydrofuran, 2-methyltetrahydrofuran, 3-methyltetrahydrofuran and the like.

Specific examples of the lactone compound include: 4-membered ring lactones such as β-propiolactone, β-methylpropiolactone and L-serine-β-lactone; 5-membered ring lactones such as γ-butyrolactone, γ-hexanolactone, γ-heptanolactone, γ-octanolactone, γ-decanolactone, γ-dodecanolactone, α-hexyl-γ-butyrolactone, α-heptyl-γ-butyrolactone, α- hydroxy-γ-butyrolactone, γ-methyl-γ-decanolactone, α-methylene-γ-butyrolactone, α,α-dimethyl-γ-butyrolactone, D-erythronolactone, α-methyl-γ-butyrolactone, γ-nonanolactone, DL-pantlactone, γ-phenyl-γ-butyrolactone, γ-undecanolactone, γ-valerolactone, 2,2-pentamethylene-1,3-dioxolan-4-one, α-bromo-γ-butyrolactone, γ-crotonolactone, α-methylene-γ-butyrolactone, α-methacryloyloxy-γ-butyrolactone and β-methacryloyloxy-γ-butyrolactone; 6-membered ring lactones such as δ-valerolactone, δ-hexanolactone, δ-octanolactone, δ-nonanolactone, δ-decanolactone, δ-undecanolactone, δ-dodecanolactone, δ-tridecanolactone, δ-tetradecanolactone, DL-mevalonolactone, 4-hydroxy-1-cyclohexane carboxylic acid δ-lactone, monomethyl-δ-valerolactone, monoethyl-δ-valerolactone, monohexyl-δ-valerolactone, 1,4-dioxan-2-one and 1,5-dioxepan-2-one; 7-membered ring lactones such as non-alkyl-ε-caprolactone, dialkyl-ε-caprolactone, monomethyl-ε-caprolactone, monoethyl-ε-caprolactone, monohexyl-ε-caprolactone, dimethyl-ε-caprolactone, di-n-propyl-ε-caprolactone, di-n-hexyl-ε-caprolactone, trimethyl-ε-caprolactone, triethyl-ε-caprolactone, tri-n-ε-caprolactone, ε-caprolactone, 5-nonyl-oxepan-2-one, 4,4,6-trimethyl-oxepan-2-one, 4,6,6-trimethyl-oxepan-2-one and 5-hydroxymethyl-oxepan-2-one; 8-membered ring lactones such as ζ-enantholactone; other lactones such as lactone, lactide, dilactide, tetramethylglycoside, 1,5-dioxepan-2-one and t-butylcaprolactone; and the like. The cyclic compounds described above may be used singly or two or more types may be combined to be used.

Among these cyclic compounds, lactone compounds such as ε-caprolactone, α-acetyl-γ-butyrolactone, α-methyl-γ-butyrolactone, γ-valerolactone and γ-butyrolactone are preferable, and ε-caprolactone is more preferable.

When the cyclic compound is caused to react by the ring-opening polymerization to introduce the side chain, it is likely that the functional group (for example, a hydroxy group) which is bonded to the cyclic molecule is poorly reactive and thus it is difficult to cause a large molecule to directly react therewith due to a three-dimensional obstacle or the like. In such a case, for example, a method can be adopted in which a low molecular weight compound such as propylene oxide is caused to react with a functional group bonded to the cyclic molecule so as to perform hydroxypropylation, and in which after the introduction of a highly reactive functional group (hydroxy group), the side chain is introduced by the ring-opening polymerization using the cyclic compound described above. In this case, the hydroxypropylated part can also be regarded as the side chain.

When the cyclic compound is caused to react by the ring-opening polymerization to introduce the side chain, the side chain introduced by the cyclic compound is referred to as the side chain modified with the cyclic compound. For example, the side chain obtained by introducing the lactone compound is referred to as the side chain modified with the lactone compound. In the present embodiment, the side chain introduced into the side chain hydroxy group-containing polyrotaxane is preferably the side chain modified with the lactone compound.

The polyrotaxane having a radical polymerizable group is manufactured by causing a hydroxy group in the side chain of the side chain hydroxy group-containing polyrotaxane and a compound having a radical polymerizable group to react with each other and thereby introducing the radical polymerizable group into the side chain of the side chain hydroxy group-containing polyrotaxane. In the reaction of the hydroxy group in the side chain of the side chain hydroxy group-containing polyrotaxane and the compound having a radical polymerizable group, known reaction conditions can be adopted.

It is considered that a radical polymerizable group capable of polymerizing with the polymerizable monomer described above is introduced into the side chain of the cyclic molecule so as to enhance compatibility, and furthermore, the photochromic compound can be held homogeneously in a state where the photochromic compound is dispersed in the gap formed by the polyrotaxane. Consequently, it is considered that the resulting photochromic resin layer can maintain and develop a superior photochromic property, and mechanical strength is also enhanced.

The compound having a radical polymerizable group is not particularly limited as long as the compound is a compound which has, in one molecule, both a functional group capable of reacting with the hydroxy group in the side chain and a radical polymerizable group, and with consideration given to compatibility with other components, a compound having no hydroxy group within a molecule is preferable.

Examples of the functional group capable of reacting with the hydroxy group include an isocyanate group (-NCO), a carboxy group (-COOH), an acid chloride group (-COCl) and the like. A compound having an isocyanate group is caused to react to introduce a radical polymerizable group through a urethane bond. A compound having a carboxy group, an acid chloride group or the like is caused to react to introduce a radical polymerizable group through an ester bond.

Specific examples of the compound having an isocyanate group and a radical polymerizable group include 2-isocyanatoethyl methacrylate, 2-isocyanatoethyl acrylate, 1,1-(bisacryloyloxymethyl)ethyl isocyanate and the like. Specific examples of the compound having a carboxy group and a radical polymerizable group include 2-methacryloyloxyethyl succinate, β-carboxyethyl acrylate and the like. The compound having an acid chloride group and a radical polymerizable group can be synthesized by causing a chlorinating agent such as thionyl chloride to react with the compound having a carboxy group and a radical polymerizable group.

Although the radical polymerizable polyrotaxane is not particularly limited as long as the radical polymerizable polyrotaxane has a radical polymerizable group in a molecule, a ratio of modification of the radical polymerizable group to hydroxy groups in a side chain, that is, a ratio of reaction of a compound having a radical polymerizable group to the number of moles of all the hydroxy groups in the side chain is preferably 1 mol% or more and less than 100 mol%. The ratio of modification can be calculated by a formula of (number of moles of radical polymerizable group introduced) / (number of moles of all hydroxy groups in side chain) × 100. In terms of adhesion, the mechanical strength of a cured body obtained and a photochromic property, the ratio of modification is preferably 10 to 95 mol%.

### ((A4-2) Radical polymerizable silsesquioxane compound)

The radical polymerizable silsesquioxane compound has various molecular structures such as a cage shape, a ladder, and a random shape, and has a radical polymerizable group such as a (meta)acryloyl group.

Examples of the radical polymerizable silsesquioxane compound as described above include compounds represented by formula (8) below.

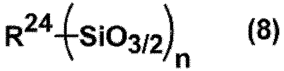

In the formula, n is the degree of polymerization, and represents an integer of 3 to 100. A plurality of R²⁴s may be identical to or different from each other, and represent a radical polymerizable group, an organic group including a radical polymerizable group, a hydrogen atom, an alkyl group, a cycloalkyl group, an alkoxy group or a phenyl group. However, at least one of R²⁴s is a radical polymerizable group or an organic group including a radical polymerizable group.

Examples of the radical polymerizable group or the organic group including a radical polymerizable group represented by R²⁴ include: a (meta)acryloyl group; organic groups having a (meta)acryloyl group such as a (meta) acryloyloxypropyl group and a (3-(meth)acryloyloxypropyl) dimethylsiloxy group; an allyl group; organic groups having an allyl group such as an allyl propyl group and an allyl propyl dimethyl siloxy group; a vinyl group; organic groups having a vinyl group such as a vinyl propyl group and a vinyl dimethyl siloxy group; and the like.

### ((A4-3) Allyl compound)

Specific examples of the allyl compound include diethylene glycol bisallyl carbonate, methoxypolyethylene glycol allyl ether (in particular, average molecular weight: 550), methoxypolyethylene glycol allyl ether (in particular, average molecular weight: 350), methoxypolyethylene glycol allyl ether (in particular, average molecular weight: 1500), polyethylene glycol allyl ether (in particular, average molecular weight: 450), methoxypolyethylene glycol-polypropylene glycol allyl ether (in particular, average molecular weight: 750), butoxypolyethylene glycol-polypropylene glycol allyl ether (in particular, average molecular weight: 1600), methacryloyloxypolyethylene glycol-polypropylene glycol allyl ether (in particular, average molecular weight: 560), phenoxypolyethylene glycol allyl ether (in particular, average molecular weight: 600), methacryloyloxypolyethylene glycol allyl ether (in particular, average molecular weight: 430), acryloyloxypolyethylene glycol allyl ether (in particular, average molecular weight: 420), vinyloxypolyethylene glycol allyl ether (in particular, average molecular weight: 560), styryloxy polyethylene glycol allyl ether (in particular, average molecular weight: 650), methoxypolyethylene thioglycol allyl thioether (in particular, average molecular weight: 730) and the like.

### ((A4-4) Vinyl compound)

Specific examples of the vinyl compound include methylvinylketone, ethylvinylketone, ethylvinyl ether, styrene, vinylcyclohexane, butadiene, 1,4-pentadiene, divinylsulfide, divinylsulfone, 1,2-divinylbenzene, 1,3-divinyl-1,1,3,3-tetramethylpropane disiloxane, diethylene glycol divinyl ether, divinyl adipate, divinyl sebacate, ethylene glycol divinyl ether, divinyl sulfoxide, divinylpersulfide, dimethyldivinylsilane, 1,2,4-trivinylcyclohexane, methyltrivinylsilane, α-methylstyrene, α-methylstyrene dimer and the like.

### (Preferred A component and mixing ratio)

In preferred combinations of the A1 component, the A2 component and the A3 component described above, as the A1 component, trimethylolpropane trimethacrylate or dipentaerythritol hexaacrylate is used, as the A2 component, polyethylene glycol dimethacrylate (in particular, g=9, h=0, average molecular weight: 536), polyethylene glycol dimethacrylate (in particular, g=14, h=0, average molecular weight: 736), 2,2-bis[4-(methacloyloxypolyethoxy)phenyl]propane (i + j = 7, average molecular weight: 672), 2,2-bis[4-(methacryloyloxypolyethoxy)phenyl]propane (i + j = 10, average molecular weight: 804), 2,2-bis[4-(acryloyloxypolyethoxy)phenyl]propane (i + j = 7, average molecular weight: 642) or 2,2-bis[4-(acryloyloxypolyethoxy)phenyl]propane (i + j = 10, average molecular weight: 776) is used and as the A3 component, glycidyl methacrylate is used.

Although the mixing ratio of the A1 component, the A2 component and the A3 component described above is not particularly limited as long as the mixing ratio of the A1 component is 24 to 100% by mass, with consideration given to the photochromic properties of the photochromic optical article obtained such as a coloring density and a decoloring rate, 24 to 100% by mass of the A1 component, 0 to 76% by mass of the A2 component, 0 to 76% by mass of the A3 component and 0 to 76% by mass of the A4 component are preferably used, 24 to 75% by mass of the A1 component, 25 to 65% by mass of the A2 component, 0 to 5% by mass of the A3 component and 0 to 10% by mass of the A4 component are more preferably used, 24 to 60% by mass of the A1 component, 40 to 76% by mass of the A2 component, 0 to 3% by mass of the A3 component and 0 to 7% by mass of the A4 component are further preferably used and 25 to 50% by mass of the A1 component, 50 to 75% by mass of the A2 component, 0 to 2% by mass of the A3 component and 0 to 5% by mass of the A4 component are particularly preferably used.

The total content of the A component is preferably 80.0 to 99.9% by mass and more preferably 88.5 to 99.9% by mass with respect to the total amount of photochromic curable composition according to the present embodiment.

### <(B) Photochromic compound>

The photochromic compound serving as the B component is a compound in which at least one naphthopyran represented by formula (1) below is bonded to a long chain group having a number average molecular weight of 300 to 10000. The photochromic compound as described above is used, and thus even in a solid matrix such as the A component having a high crosslink density, a high coloring density and a high decoloring rate can be shown, and the temperature dependence tends to be reduced. The number average molecular weight of the long chain group used is 300 to 10000, and thus compatibility with the solid matrix of the A component is superior, and cloudiness of the solid matrix tends to be suppressed.

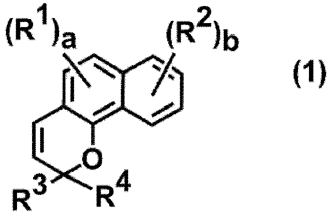

In the formula, R¹ and R² each independently represent a group bonded to the long chain group having a number average molecular weight of 300 to 10000, a hydroxy group, an alkyl group, a haloalkyl group, a cycloalkyl group optionally having a substituent, an alkoxy group, an amino group, a substituted amino group, a heterocyclic group optionally having a substituent, a cyano group, a halogen atom, an alkylthio group, an arylthio group optionally having a substituent, a nitro group, a formyl group, a hydroxycarbonyl group, an alkylcarbonyl group, an alkoxycarbonyl group, an aralkyl group optionally having a substituent, an aralkoxy group optionally having a substituent, an aryloxy group optionally having a substituent, an aryl group optionally having a substituent, a heteroaryl group optionally having a substituent, a thiol group, an alkoxyalkylthio group, a haloalkylthio group or a cycloalkylthio group optionally having a substituent. a represents an integer of 0 to 2, and b represents an integer of 0 to 4. When the a is 2, a plurality of R¹s may be identical to or different from each other, and when the a is 2 and adjacent R¹s are present, the two adjacent R¹s may form, together with carbon atoms to which each R¹ is bonded, a ring which may include an oxygen atom, a sulfur atom or a nitrogen atom, and the ring may further have a substituent. When the b is 2 to 4, a plurality of R²s may be identical to or different from each other, and when the b is 2 to 4 and adjacent R²s are present, the two adjacent R²s may form, together with carbon atoms to which each R² is bonded, a ring which may include an oxygen atom, a sulfur atom or a nitrogen atom, and the ring may further have a substituent. When neither the a nor the b is 0, at least one R¹ and at least one R² may form a ring, and the ring may further have a substituent. R³ and R⁴ each independently represent a group bonded to the long chain group having a number average molecular weight of 300 to 10000, an aryl group optionally having a substituent or a heteroaryl group optionally having a substituent. At least one selected from R¹, R², R³ and R⁴ is a group bonded to the long chain group having a number average molecular weight of 300 to 10000. The phrase "bonded to the long chain group having a number average molecular weight of 300 to 10000" means being directly bonded to the long chain group.

As described above, the photochromic compound in which at least one naphthopyran is bonded to a long chain group having a number average molecular weight of 300 to 10000 is used, and thus it is possible to form an environment where a structural change in the naphthopyran itself is easily caused, with the result that it is possible to obtain a photochromic curable composition having a superior photochromic property.

In order to achieve the operational effects as described above, the naphthopyran represented by the formula (1) described above is preferably indenonaphthopyran in which two adjacent R¹s form a ring, and is more preferably indeno[2,1-f]naftho[1,2-b]pyran represented by formula (2) below.

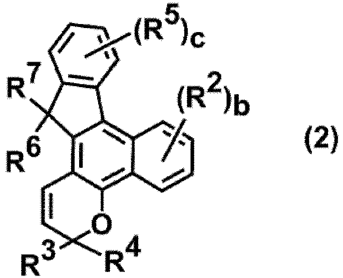

In the formula, R², R³, R⁴ and b are as defined in the formula (1). R⁵ represents a group bonded to the long chain group having a number average molecular weight of 300 to 10000, a hydroxy group, an alkyl group, a haloalkyl group, a cycloalkyl group optionally having a substituent, an alkoxy group, an amino group, a substituted amino group, a heterocyclic group optionally having a substituent, a cyano group, a halogen atom, an alkylthio group, an arylthio group optionally having a substituent, a nitro group, a formyl group, a hydroxycarbonyl group, an alkylcarbonyl group, an alkoxycarbonyl group, an aralkyl group optionally having a substituent, an aralkoxy group optionally having a substituent, an aryloxy group optionally having a substituent, an aryl group optionally having a substituent, a heteroaryl group optionally having a substituent, a thiol group, an alkoxyalkylthio group, a haloalkylthio group or a cycloalkylthio group optionally having a substituent. c represents an integer of 0 to 4. When the c is 2 to 4, a plurality of R⁵s may be identical to or different from each other, and when the c is 2 to 4 and adjacent R⁵s are present, the two adjacent R⁵s may form, together with carbon atoms to which each R⁵ is bonded, a ring which may include an oxygen atom, a sulfur atom or a nitrogen atom, and the ring may further have a substituent. R⁶ and R⁷ each independently represent a group bonded to the long chain group having a number average molecular weight of 300 to 10000, a hydrogen atom, a hydroxy group, an alkyl group, a haloalkyl group, a cycloalkyl group, an alkoxy group, an alkoxyalkyl group, a formyl group, a hydroxycarbonyl group, an alkylcarbonyl group, an alkoxycarbonyl group, a halogen atom, an aralkyl group optionally having a substituent, an aralkoxy group optionally having a substituent, an aryloxy group optionally having a substituent, an aryl group optionally having a substituent or a heterocyclic group optionally having a substituent, and the R⁶ and the R⁷ may form, together with a carbon atom at position 13 to which the R⁶ and the R⁷ are bonded, an aliphatic ring having 3 to 20 ring-member carbon atoms, a fused polycyclic ring in which an aromatic ring or an aromatic heterocycle is fused to the aliphatic ring, a heterocycle having 3 to 20 ring-member atoms or a fused polycyclic ring in which an aromatic ring or an aromatic heterocycle is fused to the heterocycle. However, at least one selected from R², R³, R⁴, R⁵, R⁶ and R⁷ is a group bonded to the long chain group having a number average molecular weight of 300 to 10000.

In the groups illustrated above, the alkyl group preferably has 1 to 6 carbon atoms, the haloalkyl group preferably has 1 to 6 carbon atoms, the cycloalkyl group preferably has 3 to 8 carbon atoms, the alkoxy group preferably has 1 to 6 carbon atoms, the alkylcarbonyl group preferably has 2 to 7 carbon atoms, the alkoxycarbonyl group preferably has 2 to 7 carbon atoms, the aralkyl group preferably has 7 to 11 carbon atoms, the aralkoxy group preferably has 7 to 11 carbon atoms, the aryloxy group preferably has 6 to 12 carbon atoms, the aryl group preferably has 6 to 12 carbon atoms, the alkylthio group preferably has 1 to 6 carbon atoms, the cycloalkylthio group preferably has 3 to 8 carbon atoms and the arylthio group preferably has 6 to 12 carbon atoms.

Among them, at least one selected from R², R³, R⁴ and R⁵ is preferably a group bonded to the long chain group having a number average molecular weight of 300 to 10000.

R² represents a group bonded to the long chain group having a number average molecular weight of 300 to 10000, an alkyl group having 1 to 6 carbon atoms, an alkoxy group having 1 to 6 carbon atoms, a substituted amino group, a heterocyclic group optionally having a substituent, an alkylthio group, an arylthio group optionally having a substituent or an aryl group having 6 to 12 carbon atoms which may have a substituent. One of these groups is more preferably present at position 6 and/or at position 7 of indeno[2,1-f]naftho[1,2-b]pyran. Preferably, R²s are present at position 6 and at position 7 of indeno[2,1-f]naftho[1,2-b]pyran, and the two R²s form an aliphatic ring (further optionally having a substituent) which may include an oxygen atom, a nitrogen atom, or a sulfur atom. Here, the number of atoms of the aliphatic ring including an oxygen atom, a nitrogen atom or a sulfur atom (the number of atoms including a hetero atom and carbon atoms located at the position 6 and at the position 7) is preferably 5 to 8. The aliphatic ring may have a substituent, and the substituent is preferably an alkyl group having 1 to 6 carbon atoms.

R⁵ preferably represents a group bonded to the long chain group having a number average molecular weight of 300 to 10000, a hydrogen atom (when b=0), an alkyl group having 1 to 6 carbon atoms, an alkoxy group having 1 to 6 carbon atoms, an aryl group having 6 to 12 carbon atoms which may have a substituent or an arylthio group. One of these groups is more preferably present at position 11 of indeno[2,1-f]naftho[1,2-b]pyran.

Preferably, R³ and R⁴ each independently represent a group bonded to the long chain group having a number average molecular weight of 300 to 10000, an aryl group optionally having a substituent or a heteroaryl group optionally having a substituent.

With consideration given to the reduction of temperature dependence, each of R⁶ and R⁷ is preferably an alkyl group having 1 to 12 carbon atoms or R⁶ and R⁷ preferably form, together with a carbon atom at position 13 to which R⁶ and R⁷ are bonded, a ring selected from an aliphatic ring having 3 to 20 ring-member carbon atoms, a fused polycyclic ring in which an aromatic ring or an aromatic heterocycle is fused to the aliphatic ring, a heterocycle having 3 to 20 ring-member atoms or a fused polycyclic ring in which an aromatic ring or an aromatic heterocycle is fused to the heterocycle, that is, a ring that forms a spiro structure with a carbon at position 13 located in a 5-membered ring of indenonaphthopyran. Among them, R⁶ and R⁷ preferably form an aliphatic ring having 3 to 20 ring-member carbon atoms, and specifically, R⁶ and R⁷ more preferably form a ring selected from a cyclopentane ring, a cyclohexane ring, a cycloheptane ring, a cyclooctane ring, a cyclononane ring, a cyclodecane ring, a cycloundecane ring, a cyclododecane ring and a spirodicyclohexane ring. The ring that forms a spiro structure may have, as 1 to 10 substituents, an alkyl group having 1 to 3 carbon atoms or a cycloalkyl group having 5 to 7 carbon atoms or a cycloalkyl group having 5 to 7 carbon atoms may be fused. As a more preferred group, a group represented by a formula below can be mentioned.

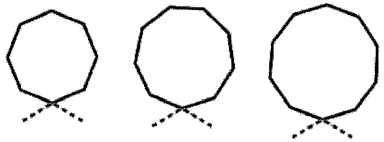

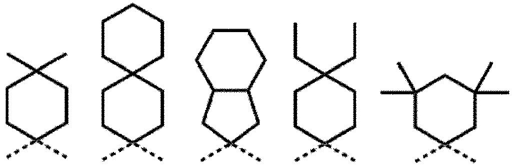

As the long chain group having a number average molecular weight of 300 to 10000, a known long chain group can be used without being particularly limited, and examples thereof include a polyalkylene group, a polyalkyleneoxy group, a polyfluoroalkylene group, a polyfluoroalkylenyloxy group, a polydialkylsilyl group, a polydialkylsilyloxy group, a polyester group and the like. The long chain group may be used singly or may be formed through another group. For example, when R³ and/or R⁴ is a group bonded to the long chain group having a number average molecular weight of 300 to 10000, in the long chain group having a number average molecular weight of 300 to 10000, the group to which the long chain group is bonded is preferably an aryl group or a heteroaryl group. Furthermore, between the long chain group and the aryl group or the heteroaryl group, a group containing an ether group, an ester group or the like may be interposed.

Among these long chain groups, long chain groups formed by a polyalkylene group, a polyalkyleneoxy group, a polydialkylsilyloxy group, a polyester group and a combination thereof are preferable, long chain groups formed by a polyalkyleneoxy, a polydialkylsilyloxy group, a polyester group and a combination thereof are more preferable, a polyalkyleneoxy group and a polydialkylsilyloxy group are further preferable and a polyalkyleneoxy group is particularly preferable.

The number of naphthopyrans bonded to a long chain group having a number average molecular weight of 300 to 10000 is not particularly limited, and at least one naphthopyran is preferably present. For example, not only a form in which two or more naphthopyrans are bonded to one long chain group but also a form in which a plurality of long chain groups are bonded to one naphthopyran can be included. In these forms, the number of naphthopyrans is preferably 0.1 to 4 and more preferably 0.2 to 2. A case where the number of naphthopyrans is 1 or less is the case of a photochromic compound in which a plurality of long chain groups is bonded to one naphthopyran. For example, a case where the number of naphthopyrans is 0.25 indicates that four long chain groups having a number average molecular weight of 300 to 10000 are bonded to the one naphthopyran. When a plurality of long chain groups having a number average molecular weight of 300 to 10000 are present, the long chain groups having a number average molecular weight of 300 to 10000 may be identical to or different from each other.

The number average molecular weight of these long chain groups is preferably 400 to 7500 and more preferably 450 to 5000.

The naphthopyran used in the photochromic compound serving as the B component is not particularly limited as long as the naphthopyran has the structure described above, and examples thereof include the naphthopyrans disclosed in Patent Documents 3 to 5 and naphthopyrans obtained by appropriate selection from the combinations described above.

Although examples of the photochromic compound serving as the B component are shown below, the photochromic compound serving as the B component is not limited to the examples. In the following examples, n is preferably set as necessary such that the number average molecular weight of the long chain group is 300 to 10000, and is generally selected from 1 to 250 (since the long chain group generally has a plurality of molecular weights, the long chain group is indicated by the number average molecular weight, and hence, n can be a value other than an integer value). Me represents a methyl group.

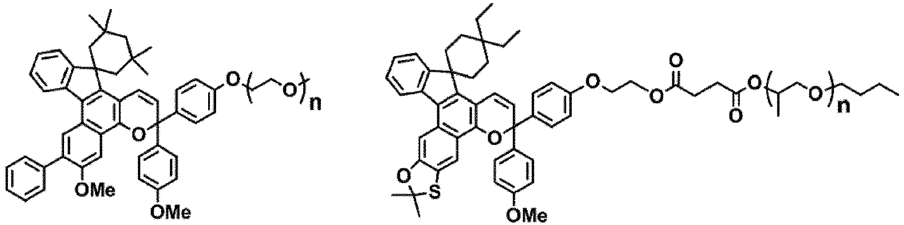

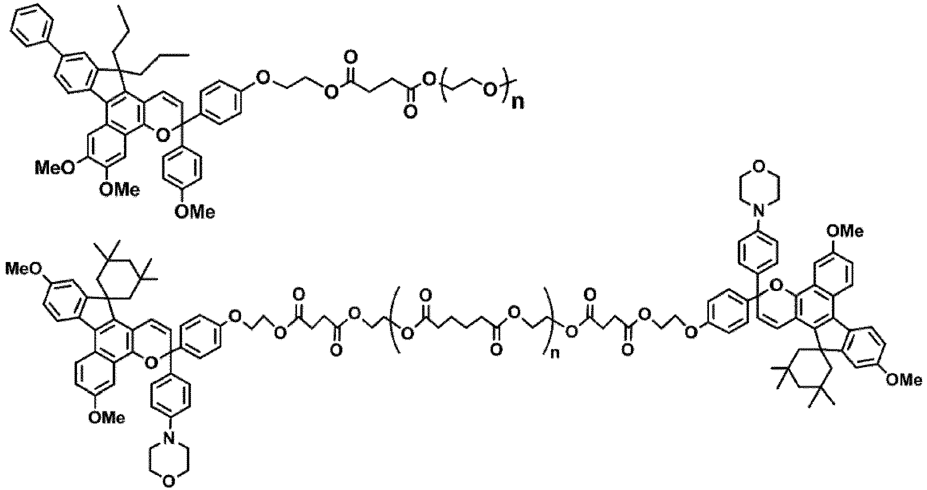

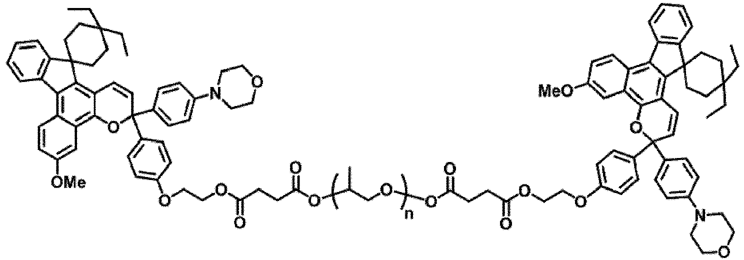

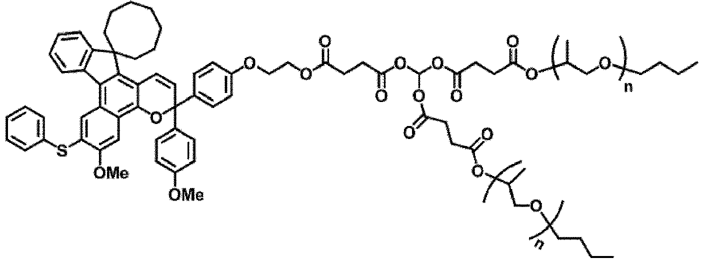

As the naphthopyran used in the photochromic compound serving as the B component, one type may be used singly or a plurality of types of naphthopyrans may be combined to be used according to a desired color tone so that various color tones required as photochromic lenses are obtained. As long as the effects of the present invention are not impaired, the photochromic compound serving as the B component may be combined with another photochromic compound without a long chain group having a number average molecular weight of 300 to 10000. As the photochromic compound with which the photochromic compound serving as the B component is combined, known compounds such as fulgide, fulgimide, spirooxazine and chromen can be used without any restriction.

In terms of the photochromic properties of the photochromic optical article obtained such as the coloring density and the decoloring rate, the content of the B component in the photochromic curable composition according to the present embodiment is preferably 0.01 to 15 parts by mass with respect to 100 parts by mass of the A component, and more preferably 0.1 to 10 parts by mass.

### <Other components>

As long as the effects of the present invention are not impaired, the photochromic curable composition according to the present embodiment may contain various types of known mixing agents. Examples of the mixing agent include a polymerization initiator, a UV absorber, an infrared absorber, a UV stabilizer, an antioxidant, a color inhibitor, an antistatic agent, a dye, a pigment, a fragrance, a solvent, a leveling agent and the like.

Examples of the polymerization initiator among the mixing agents described above include a thermal polymerization initiator, a photopolymerization initiator and the like.

Examples of the thermal polymerization initiator include: diacyl peroxides such as benzoyl peroxide, p-chlorobenzoyl peroxide, decanoyle peroxide, lauroyl peroxide and acetyl peroxide; peroxyesters such as t-butylperoxy-2-ethylhexanate, t-butylperoxyneodecanate, cumylperoxyneodecanate and t-butylperoxybenzoate; percarbonates such as diisopropyl peroxydicarbonate and di-sec-butylperoxydicarbonate; azo compounds such as azobisisobutyronitrile; and the like.

Examples of the photopolymerization initiator include: acetophenone compounds such as 1-phenyl-2-hydroxy-2-methylpropan-1-one, 1-hydroxycyclohexylphenylketone and 1-(4-isopropylphenyl)-2-hydroxy-2-methylpropan-1-one; α-dicarbonyl compounds such as 1,2-diphenylethanedione and methylphenylglycoxylate; acylphosphine oxide compounds such as 2,6-dimethylbenzoyldiphenylphosphine oxide, 2,4,6-trimethylbenzoyldiphenylphosphine oxide, 2,4,6-trimethylbenzoyldiphenylphosphinic acid methyl ester, 2,6-dichlorobenzoyldiphenylphosphine oxide and 2,6-dimethoxybenzoyldiphenylphosphine oxide; and the like.

When the photopolymerization initiator is used, a known polymerization curing accelerator such as a tertiary amine can be used together.

The content of the other components in the photochromic curable composition according to the present embodiment is generally 0.001 to 10 parts by mass with respect to 100 parts by mass of the A component, and preferably 0.01 to 3 parts by mass.

### <Method of preparing photochromic curable composition>

The photochromic curable composition according to the present embodiment can be prepared by mixing the A component, the B component, and the other components as necessary by a known method.

### <Photochromic optical article>

The photochromic optical article according to the present embodiment is formed by polymerizing the photochromic curable composition described above. Polymerization for manufacturing the photochromic optical article is performed by irradiation with active energy rays (such as ultraviolet rays, α rays, β rays or γ rays), heating, or by both the irradiation and the heating. In other words, an appropriate polymerizing means is preferably adopted according to the A component used, the type of polymerization initiator, and the form of the photochromic optical article which is formed.

When the photochromic curable composition is thermally polymerized, in particular temperature conditions affect the properties of the photochromic optical article obtained. Although the temperature conditions cannot be limited unconditionally because they are affected by the type and amount of thermal polymerization initiator and the type of A component, in general, a method of starting polymerization at relatively low temperature and increasing the temperature slowly is preferably used. Since a polymerization time is different depending on various types of factors as with the temperature, it is preferable to previously determine an optimal time corresponding to these conditions, but it is generally preferable to choose such conditions as to complete the polymerization for 2 to 48 hours.

When the photochromic curable composition is photopolymerized, in particular irradiation conditions among polymerization conditions affect the properties of the photochromic optical article obtained. Although the irradiation conditions cannot be limited unconditionally because they are affected by the type and amount of photopolymerization initiator and the type of A component, it is generally preferable to choose such conditions as to irradiate the photochromic curable composition with UV light of 50 to 500 mW/cm² having a wavelength of 365 nm for 0.5 to 5 minutes.

When photochromic lenses are manufactured as the photochromic optical article, as long as uniform dimming performance is obtained, a known method which will be described below can be adopted.

For example, when photochromic lenses are manufactured by a kneading method, it is possible to obtain a photochromic optical article molded in the form of lenses or the like by casting polymerization in which the photochromic curable composition is injected between glass molds held by an elastomer gasket or a spacer to perform polymerization. In the polymerization, heating in an air furnace or irradiation with active energy rays such as ultraviolet rays can be adopted according to the types of A component and polymerization initiator.

When photochromic lenses are manufactured by a lamination method, the photochromic curable composition is dissolved, as necessary, in an organic solvent to prepare a coating liquid, the coating liquid is applied by spin coat, dipping or the like to the surface of an optical base material such as a lens base material and is dried to remove the organic solvent, then polymerization is performed by UV irradiation, heating or the like in an inert gas such as nitrogen and thus it is possible to obtain a photochromic optical article in which a photochromic layer is formed on the surface of the optical base material (coating method).

It is also possible to obtain a photochromic optical article in which a photochromic layer is formed on the surface of an optical base material by casting polymerization using an inner mold in which the optical base material such as a lens base material is arranged in a glass mold to form a predetermined air gap, the photochromic curable composition is injected into the air gap and polymerization is performed in this state by UV irradiation, heating or the like (casting polymerization method).

When a photochromic layer is formed on the surface of an optical base material by the lamination method as described above (the coating method and the casting polymerization method), chemical treatment using an alkaline solution, an acid solution or the like, physical treatment using corona discharge, plasma discharge, polishing or the like or the like is previously performed on the surface of the optical base material, and thus it is possible to improve adhesion between the photochromic layer and the optical base material. Naturally, it is possible to provide a transparent adhesive resin layer on the surface of the optical base material.

Furthermore, when photochromic lenses are manufactured by a binder method, a photochromic sheet is first produced by sheet molding using the photochromic curable composition, polymerization is performed with this photochromic sheet sandwiched between two transparent sheets (optical sheets) and thus it is possible to obtain a photochromic laminate in which a photochromic layer serves as an adhesive layer. For the production of the photochromic sheet, the coating method using a coating liquid in which the photochromic curable composition is dissolved in an organic solvent can also be adopted.

The photochromic laminate produced as described above is fitted into a mold, a thermoplastic resin (such as polycarbonate) for an optical base material such as lenses is injection molded and thus it is possible to obtain a photochromic optical article, such as lenses, having a predetermined shape in which the photochromic laminate is formed. It is also possible to obtain a photochromic optical article by adhering the photochromic laminate to the surface of the optical base material using an adhesive or the like.

On the photochromic optical article, according to the application thereof, post-processing can be performed such as: dyeing using a dye such as a disperse dye; the production of a hard coat film using a hard coat agent with a silane coupling agent or a sol of silicon, zirconium, antimony, aluminum, tin, tungsten or the like used as a main component; the formation of a thin film by vapor deposition of a metal oxide such as SiO₂, TiO₂ or ZrO₂; anti-reflection or anti-static treatment performed by applying an organic polymer to form a thin film; and the like.

### EXAMPLES

Although the present invention will now be described in detail using Examples and Comparative Examples, the present invention is not limited to Examples described below. In Examples and Comparative Examples, the components described above, the evaluation methods of photochromic properties and the like are as follows.

### <(A) (Meth)acrylate composition>

(A1) Polyfunctional (meth)acrylate having three or more (meth)acryloyl groups within a molecule
   TMPT: Trimethylolpropane triacrylate
   DTMP: Ditrimethylolpropane tetramethacrylate
(A2) Bifunctional (meth)acrylate
   PEG14: Polyethylene glycol dimethacrylate (average molecular weight: 736)
   BPA10: 2,2-bis[4- (methacryloyloxypolyethoxy) phenyl] propane (average molecular weight: 804)
   PEG9: Polyethylene glycol dimethacrylate (average molecular weight: 536)
   PEG9A: Polyethylene glycol diacrylate (average molecular weight: 508)
   C4PCDA: Reactant of polycarbonate diol obtained by phosgenation of tetramethylene glycol and acrylic acid
   BPE-500: Ethoxylated bisphenol A dimethacrylate (made by SHIN-NAKAMURA CHEMICAL Co., Ltd.)
(A3) Monofunctional (meth)acrylate
   GMA: Glycidyl methacrylate
(A4) Polymerizable monomer other than (A1) to (A3)
   PR1: Polyrotaxane having a (meta)acryloyl group prepared in Preparation Example 1 below
   PS1: Silsesquioxane having a (meta)acryloyl group prepared in Preparation Example 2 below

### <(B) Photochromic compound>

(B1) Photochromic compound having a polypropylene glycol monobutyl ether chain with a number average molecular weight of 1000 represented by a formula below (n=17.2).

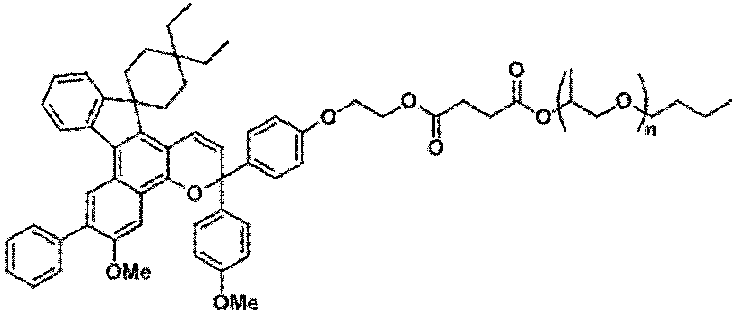

(B2) Photochromic compound having a polyethylene glycol chain with a number average molecular weight of 3000 represented by a formula below (n=68.2).

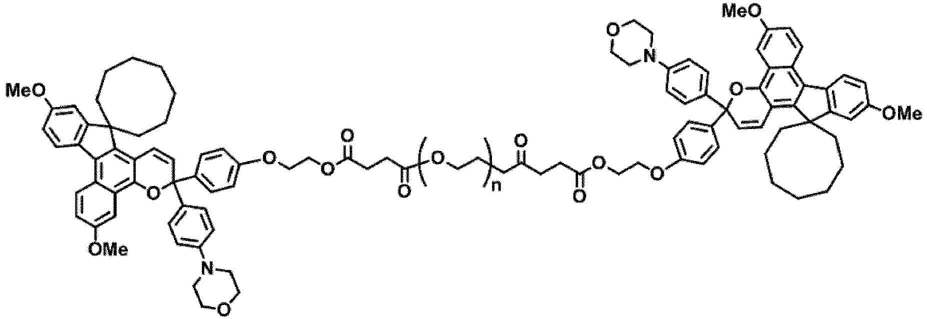

(B3) Photochromic compound having a polydimethylsiloxane chain with a number average molecular weight of 1100 represented by a formula below (n=12).

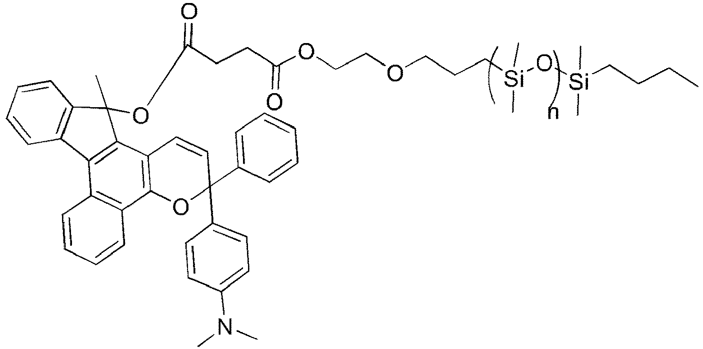

(BR1, BR2) Photochromic compound used in Comparative Examples

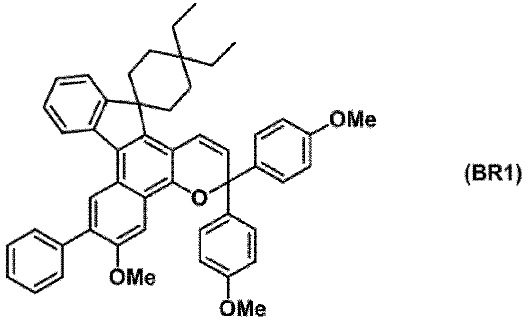

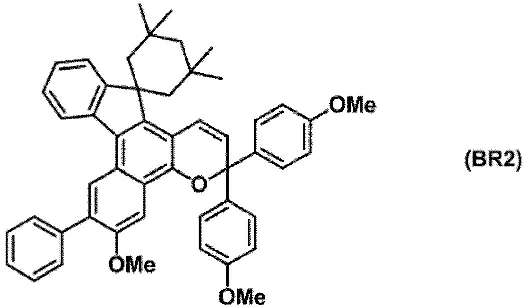

### <Other components>

P11: Phenyl bis(2,4,6-trimethylbenzoyl) phosphine oxide
HA: Bis(1,2,2,6,6-pentamethyl-4-piperidyl) sebacate
HP: Ethylene bis (oxyethylene) bis[3-(5-tert-butyl-4-hydroxy-m-tolyl) propionate]

### <Preparation Example 1: Preparation method of PR1>

### (1) Preparation of axis molecule (PEG-COOH)

As a compound for formation of an axis molecule, linear polyethylene glycol (PEG) having a molecular weight of 20000 was prepared. 10 g of PEG, 100 mg of TEMPO (2,2,6,6-tetramethyl-1-piperidinyloxy radical) and 1 g of sodium bromide were dissolved in 100 mL of water. 5 mL of commercially available sodium hypochlorite aqueous solution (effective chlorine concentration of 5%) was added into the solution described above, and the resulting mixture was stirred at room temperature for 10 minutes. Thereafter, up to 5 mL of ethanol was added to complete the reaction. Then, after extraction using 50 mL of methylene chloride was performed, methylene chloride was distilled off, the resulting mixture was dissolved in 250 mL of ethanol and was then reprecipitated at a temperature of -4°C for 12 hours, and PEG-COOH was collected as an axis molecule and was dried.

### (2) Preparation of side chain unintroduced polyrotaxane

Each of 3 g of PEG-COOH prepared as described above and 12 g of α-cyclodextrin (a-CD) was dissolved in 50 mL of hot water at 70°C, and the resulting solutions were mixed and shaken well. Then, the mixed solution was reprecipitated at 4°C for 12 hours, and the precipitated inclusion complex was freeze-dried and collected. Thereafter, 0.13 g of adamantane amine was dissolved in 50 mL of dimethylformamide (DMF) at room temperature, and then the inclusion complex described above was added and rapidly shaken well. Then, a solution obtained by dissolving, in DMF, 0.38 g of BOP reagent (benzotriazole 1-yl-oxy-tris (dimethylamino) phosphonium hexafluorophosphate) was further added and was shaken well. Furthermore, a solution obtained by dissolving 0.14 mL of diisopropylethylamine in DMF was added and shaken well, and thus a slurry reagent was obtained. The slurry reagent obtained as described above was left to stand at 4°C for 12 hours. Thereafter, 50 mL of DMF/methanol mixed solvent (volume ratio: 1/1) was added and mixed, and centrifugation was performed and the supernatant was discarded. Furthermore, after washing using the DMF/methanol mixed solution was performed, washing using methanol was performed, and centrifugation was performed, with the result that a precipitate was obtained. The precipitate obtained was dried by vacuum drying and was thereafter dissolved in 50 mL of DMSO, and the resulting transparent solution was dropped into 700 mL of water, with the result that side chain unintroduced polyrotaxane was precipitated. The precipitated side chain unintroduced polyrotaxane was collected by centrifugation and was dried by vacuum drying. Furthermore, the resulting mixture was dissolved in DMSO, precipitated in water, and collected and dried, and thus the purified side chain unintroduced polyrotaxane was obtained. Here, the inclusion amount of α-CD was 0.25.

Here, the inclusion amount was measured by dissolving the side chain unintroduced polyrotaxane in DMSO-d₆ and using an ¹H-NMR measuring device (JNM-LA500 made by JEOL Ltd.), and calculated by the following method. Here, X, Y and X/(Y-X) represent the following meanings.
X: Integral value of hydroxy group-derived protons of 4 to 6 ppm cyclodextrin
Y: Integral value of methylene group-derived protons of 3 to 4 ppm cyclodextrin and PEG
X/(Y-X): Proton ratio of cyclodextrin to PEG

First, X/(Y-X) at the maximum inclusion amount 1.0 was first calculated theoretically and in advance, and the inclusion amount was calculated by comparing this value with X/(Y-X) calculated from the analytical value of the actual compound.

### (3) Introduction of side chain into side chain unintroduced polyrotaxane

500 mg of the side chain unintroduced polyrotaxane purified as described above was dissolved in 50 mL of 1 mol/L NaOH aqueous solution, 3.83 g of 66 mmol propylene oxide was added and the resulting mixture was stirred under an argon atmosphere at room temperature for 12 hours. Then, 1 mol/L HCL aqueous solution was used to neutralize the above solution to achieve a pH of 7 to 8, was dialyzed with a dialysis tube and was thereafter freeze-dried, and thus hydroxypropylated polyrotaxane was obtained. The degree of modification of cyclic molecules by hydroxypropyl groups to hydroxy groups was 50%. 5 g of the hydroxypropylated polyrotaxane obtained was dissolved in 30 g of ε-caprolactone at 80°C, and thus the mixed liquid was prepared. The mixed liquid was stirred at 110°C for 1 hour while dry nitrogen was being blown, then 0.16 g of 50 mass% xylene solution of tin(II) 2-ethylhexanoate was added and the resulting solution was stirred at 130°C for 6 hours. Thereafter, xylene was added, and thus an introduced polycaprolactone-modified polyrotaxane xylene solution into which a side chain having a non-volatile concentration of about 35% by mass was obtained.

The polycaprolactone-modified polyrotaxane xylene solution prepared as described above was dropped into hexane and was collected and dried, and thus the polycaprolactone-modified polyrotaxane serving as the side chain hydroxy group-containing polyrotaxane was obtained. The polycaprolactone-modified polyrotaxane obtained was identified by ¹H-NMR and GPC, and was confirmed to be the side chain hydroxy group-containing polyrotaxane having a desired structure. In the polycaprolactone-modified polyrotaxane, the degree of modification of the side chain was 50%, the (average) molecular weight of the side chain was about 500 and the mass-average molecular weight (Mw) measured by GPC was 700000.

### (4) Introduction of acryloyl group into side chain hydroxy group-containing polyrotaxane

10 g of the polycaprolactone-modified polyrotaxane serving as the side chain hydroxy group-containing polyrotaxane prepared in (3) above was dissolved in 50 mL of methyl ethyl ketone, 5 mg of dibutylhydroxytoluene (polymerization inhibitor) was added and thereafter 1.94 g of 2-acryloyloxyethyl isocyanate was dropped. 10 mg of dibutyltin dilaurate was added as a catalyst, the resulting solution was stirred at 70°C for 4 hours and thus a methyl ethyl ketone solution of polyrotaxane having a (meta)acryloyl group in which an acryloyl group was introduced into a hydroxy group at the end of polycaprolactone was obtained. This solution was dropped into hexane, the precipitated solid was collected and dried and thus polyrotaxane (PR1) having a (meta)acryloyl group was obtained. In the polyrotaxane (PR1) having a (meta)acryloyl group, the (average) molecular weight of the side chain was about 600, the mass-average molecular weight (Mw) measured by GPC was 880000, the ratio of modification of the acryloyl group was 85 mol% and the ratio of the hydroxy group left in the side chain was 15 mol%.

### <Preparation Example 2: Preparation method of PR1>

248 mL of ethanol and 54 g of 3.0 mol water were added to 248 g of 1.0 mol 3-trimethoxysilylpropyl methacrylate, 0.20 g of 0.005 mol sodium hydroxide was added as a catalyst and the resulting mixture was reacted at 30°C for 3 hours. After the disappearance of the raw materials was confirmed, neutralization was performed with dilute hydrochloric acid, 174 mL of toluene, 174 mL of heptane and 174 g of water were added and a water layer was removed. Thereafter, an organic layer was rinsed until the water layer was neutral, and by concentrating the solvent, silsesquioxane (PS1) having a (meth)acryloyl group was obtained. The complete consumption of the raw materials was confirmed by ¹H-NMR. By ²⁹Si-NMR, the PS1 obtained was confirmed to be a mixture having a cage-shaped structure, a ladder-shaped structure, and a random structure. The acid value of the PS1 obtained was 1.1 mg KOH/g and the mass-average molecular weight (Mw) was 4800.

### <Evaluation methods>

The photochromic optical article obtained was used as samples, the samples were irradiated with a xenon lamp L-2480 (300W) SHL-100 made by Hamamatsu Photonics K.K. through an aeromass filter (made by Corning Inc.) at 23°C and 35°C with beam intensities of 365 nm = 2.4 mW/cm² and 245 nm = 2.4 µW/cm² for 300 seconds and thus coloring was performed, with the result that the photochromic properties of the photochromic optical article were measured. The photochromic properties, Vickers hardness, the elution of the photochromic compound and the like were evaluated by the following methods.

### (1) Photochromic properties

- Maximum absorption wavelength (λmax): Maximum absorption wavelength after coloring determined by a spectrophotometer (instantaneous multi-channel photodetector MCPD1000) made by Otsuka Electronics Co., Ltd. The maximum absorption wavelength relates to a color tone at the time of coloring.
- 23°C coloring density {ε(300)-ε(0)}: A difference between an absorbance {ε(300)} after light irradiation for 300 seconds and an absorbance ε(0) before the light irradiation at the maximum absorption wavelength. The more this value is increased, the more superior the photochromic property can be said to be.
- 23°C decoloring rate [t1/2(sec.)]: A time necessary for reducing the absorbance of the sample at the maximum absorption wavelength to half of {ε(300)-ε(0)} when the light irradiation is stopped after light irradiation for 300 seconds. The more this time is decreased, the more superior the photochromic property can be said to be.
- Temperature dependence: A ratio of 35°C coloring density to 23°C coloring density. The more this value is increased, the more temperature dependence is reduced, and superior it can be said to be.

### (2) Vickers hardness (Hv)

The Vickers hardness was measured with a hardness tester with an automatic measurement (reading) device (PMT-X7A made by Matsuzawa Co., Ltd). Specifically, a Vickers indenter was pressed into the surface of the sample with a load of 10 gf for 30 seconds, and the Vickers hardness was obtained from an indentation. The Vickers hardness serves as an indicator of whether or not a scratch is made in the step of lens processing. As a general guide, when the Vickers hardness exceeds 4.5, a scratch is unlikely to be made whereas when the Vickers hardness is 4.5 or less, a scratch is easily made.

### (3) Elution

The photochromic optical article obtained was impregnated with 50 mL of methanol and was heated to reflux for 24 hours. After removal of the photochromic optical article, methanol was concentrated under reduced pressure, and 5 mL of chloroform was added to the remaining residue to dissolve it uniformly.

### -Evaluation criteria-

4: No coloring at all
3: Very slight coloring can be confirmed
2: Slight coloring
1: Coloring

### <Example 1>

The photochromic compound was added to the A components and other components shown in Table 1 such that 26 mmol was achieved for 100 g of the A components, and thus a photochromic curable composition was obtained. Values in parentheses in Table 1 indicate parts by mass. The photochromic curable composition obtained as described above was used, and thus a photochromic optical article was obtained by the following method.

A thiourethane plastic lens which served as an optical base material having a center thickness of 2 mm and had a refractive index of 1.60 was prepared. The thiourethane plastic lens was previously subjected to alkaline etching using a 10% aqueous sodium hydroxide solution at 50°C for 5 minutes and was then sufficiently washed with distilled water.

A spin coater (1H-DX2, made by Mikasa Co., Ltd.) was used to coat the surface of the plastic lens with a moisture-curing primer (product name; TR-SC-P, made by Tokuyama Corporation) at a rotation speed of 70 rpm for 15 seconds and then at a rotation speed of 1000 rpm for 10 seconds. Thereafter, 2 g of the photochromic curable composition obtained as described above was applied by spin coat at a rotation speed of 60 rpm for 40 seconds and then at a rotation speed of 600 rpm for 10 to 20 seconds such that the film thickness of the photochromic curable composition was 40 µm.

A metal halide lamp with an output of 200 mW/cm² was used to irradiate the lens coated with the photochromic curable composition as described above with light in a nitrogen gas atmosphere for 90 seconds, and thus the photochromic curable composition was polymerized. Thereafter, heating was performed at 110°C for 1 hour, and thus the photochromic optical article having a photochromic layer was produced. The results of evaluations are shown in Table 2.

### <Examples 2 to 5, Comparative Examples 1 to 3>

The same operation as in Example 1 was performed except that the A components, the photochromic compound, and the other components were changed as shown in Table 1, and thus the photochromic optical articles were produced. The results of evaluations are shown in Table 2.

**[Table 1]**

| | A1 component | A2 component | A3 component | A4 component | Other components | Photochromic compound |
|---|---|---|---|---|---|---|
| Example 1 | | | GMA (1) | - | PI1 (0.3) | |
| | TMPT (50) | PEG14 (49) | | | HA (1.0) | B1 |
| | | | | | HP (3.0) | |
| Example 2 | | BPA10 (40) | GMA (1) | - | PI1 (0.3) | |
| | TMPT (31) | PEG9A (18) | | | HA (1.0) | B1 |
| | | PEG14 (10) | | | HP (3.0) | |
| Example 3 | | C4PCDA (13) | GMA(2) | - | PI1 (0.3) | |
| | TMPT (40) | | | | HA (1.0) | B2 |
| | | PEG14 (45) | | | HP (3.0) | |
| Example 4 | TMPT (15) | C4PCDA (31) | GMA (1) | PR1 (3) | PI1 (0.3) | |
| | | PEG14 (25) | | | HA (1.0) | B2 |
| | DTMP (15) | PEG9 (10) | | | HP (3.0) | |
| Example 5 | | | GMA (1) | - | PI1 (0.3) | |
| | TMPT (80) | PEG9 (19) | | | HA (1.0) | B1 |
| | | | | | HP (3.0) | |
| Comparative Example 1 | | PEG14 (70) | GMA (1) | - | PI1 (0.3) | |
| | TMPT (15) | C4PCDA (14) | | | HA (1.0) | BR1 |
| | | | | | HP (3.0) | |
| Comparative Example 2 | | BPA10 (40) | GMA (1) | - | PI1 (0.3) | |
| | TMPT (31) | PEG9A (18) | | | HA (1.0) | BR1 |
| | | PEG14 (10) | | | HP (3.0) | |
| Comparative Example 3 | | BPA10 (40) | GMA (1) | - | PI1 (0.3) | |
| | TMPT (31) | PEG9A (18) | | | HA (1.0) | BR2 |
| | | PEG14 (10) | | | HP (3.0) | |

**[Table 2]**

| | Maximum absorption wavelength (nm) | 23°C coloring density (-) | Temperature dependence (%) | T1/2 | Hv | Elution |
|---|---|---|---|---|---|---|
| Example 1 | 560 | 0.85 | 66% | 88 | 6.3 | 4 |
| Example 2 | 559 | 0.86 | 64% | 124 | 4.5 | 4 |
| Example 3 | 601 | 1. 14 | 69% | 75 | 5.5 | 3 |
| Example 4 | 600 | 1. 12 | 68% | 65 | 5.3 | 4 |
| Example 5 | 560 | 0.85 | 68% | 145 | 11.8 | 4 |
| Comparative Example 1 | 564 | 0.98 | 62% | 60 | 1.9 | 2 |
| Comparative Example 2 | 563 | 1. 04 | 64% | 160 | 4.5 | 4 |
| Comparative Example 3 | 568 | 0.6 | 61% | 68 | 4.6 | 4 |

The results of temperature dependence and a decoloring half-life at 23°C in Examples 1, 3 and 5 and Comparative Examples 1 to 3 are shown in FIG. 1.

As found from FIG. 1, in the photochromic optical articles in Comparative Examples using the photochromic compounds which were not bonded to a long chain group having a number average molecular weight of 300 to 10000, a relationship between the temperature dependence and the 23°C decoloring half-life is substantially linear. In other words, the compounds having a high decoloring rate significantly depend on temperature. Comparative Example 1 is an example where the content of polyfunctional (meth)acrylate having three or more (meth)acryloyl groups within a molecule was low, and Comparative Examples 2 and 3 are examples where the photochromic compounds which did not include a long chain group having a number average molecular weight of 300 to 10000 were used.

On the other hand, as in Examples, in the photochromic optical articles using the (meth)acrylate composition in which the content of the polyfunctional (meth)acrylate having three or more (meth)acryloyl groups within a molecule was 24 to 100% by mass and the photochromic compounds including a long chain group having a number average molecular weight of 300 to 10000, by comparison in the same 23°C decoloring half-life, the values of the temperature dependence were enhanced as compared with Comparative Examples.

To summarize the results, in the photochromic optical articles using the (meth)acrylate composition in which the content of the polyfunctional (meth)acrylate having three or more (meth)acryloyl groups within a molecule was 24 to 100% by mass and the photochromic compounds including a long chain group having a number average molecular weight of 300 to 10000, sufficient hardness and superior photochromic properties were provided. In other words, the long chain group having a number average molecular weight of 300 to 10000 was provided to significantly enhance the decoloring rate, and the content of the polyfunctional (meth)acrylate having three or more (meth)acryloyl groups within a molecule was increased to enhance the crosslink density, with the result that the temperature dependence of the photochromic optical articles was unlikely to be degraded. Consequently, the photochromic optical articles which satisfied both of them, as compared with the photochromic optical articles which did not satisfy at least one of them, had improved temperature dependence.

### <Examples 6 to 11>

The same operation as in Example 1 was performed except that the A components, the photochromic compound, and the other components were changed as shown in Table 3, and thus the photochromic optical articles were produced. The results of evaluations are shown in Table 4.

**[Table 3]**

| | A1 component | A2 component | A3 component | A4 component | Other components | Photochromic compound |
|---|---|---|---|---|---|---|
| Example 6 | TMPT (12) | PEG14 (35) | GMA (1) | PS1 (5) | PI1 (0.3) | B1 |
| | | | | | HA (1.0) | |
| | DTMP (12) | BPE500 (35) | | | | |
| | | | | | HP (3.0) | |
| Example 7 | DTMP (40) | PEG14 (40) | GMA (1) | - | PI1 (0.3) | B1 |
| | | | | | HA (1.0) | |
| | | PEG9A (19) | | | | |
| | | | | | HP (3.0) | |
| Example 8 | TMPT (25) | C4PCDA (21) | - | PR1 (S) | PI1 (0.3) | B2 |
| | | | | | HA (1.0) | |
| | DTMPT (25) | PEG14 (24) | | | | |
| | | | | | HP (3.0) | |
| Example 9 | TMPT (67) | PEG14 (10) | GMA (1) | - | PI1 (0.3) | B3 |
| | | PEG9A (12) | | | HA (1.0) | |
| | | PEG9 (5) | | | HP (3.0) | |
| | | C4PCDA (5) | | | | |
| Example 10 | DTMP (32) | C4PCDA (10) | GMA (1) | PR1 (3) | PI1 (0.3) | B2 |
| | | | | | HA (1.0) | |
| | | PEG14 (50) | | PS1 (3) | | |
| | | | | | HP (3.0) | |
| Example 11 | TMPT (35) | PEG14 (20) | GMA (1) | PR1 (3) | PI1 (0.3) | B1 |
| | | BPE500 (30) | | | HA (1.0) | |
| | | C4PCDA (11) | | | HP (3.0) | |

**[Table 4]**

| | Maximum absorption wavelength (nm) | 23°C coloring density (-) | Temperature dependence (%) | T1/2 | Hv | Elution |
|---|---|---|---|---|---|---|
| Example 6 | 559 | 0.85 | 64% | 110 | 4.2 | 4 |
| Example 7 | 560 | 0.90 | 63% | 85 | 5.1 | 4 |
| Example 8 | 600 | 1.10 | 69% | 67 | 6.4 | 4 |
| Example 9 | 584 | 0.71 | 63% | 60 | 6.3 | 4 |
| Example 10 | 601 | 1.09 | 68% | 74 | 4.8 | 4 |
| Example 11 | 562 | 0.94 | 63% | 75 | 4.3 | 4 |

## Claims

1. A photochromic curable composition comprising:
(A) a (meth)acrylate composition in which a content of a polyfunctional (meth)acrylate having three or more (meth)acryloyl groups within a molecule is 24 to 100% by mass; and
(B) a photochromic compound in which at least one naphthopyran represented by formula (1) below is bonded to a long chain group having a number average molecular weight of 300 to 10000: 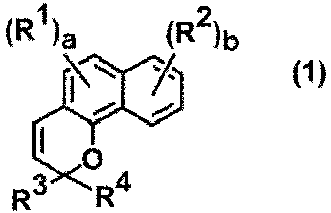
wherein,
R¹ and R² each independently represent a group bonded to the long chain group having a number average molecular weight of 300 to 10000, a hydroxy group, an alkyl group, a haloalkyl group, a cycloalkyl group optionally having a substituent, an alkoxy group, an amino group, a substituted amino group, a heterocyclic group optionally having a substituent, a cyano group, a halogen atom, an alkylthio group, an arylthio group optionally having a substituent, a nitro group, a formyl group, a hydroxycarbonyl group, an alkylcarbonyl group, an alkoxycarbonyl group, an aralkyl group optionally having a substituent, an aralkoxy group optionally having a substituent, an aryloxy group optionally having a substituent, an aryl group optionally having a substituent, a heteroaryl group optionally having a substituent, a thiol group, an alkoxyalkylthio group, a haloalkylthio group or a cycloalkylthio group optionally having a substituent,
a represents an integer of 0 to 2 and b represents an integer of 0 to 4,
when the a is 2, a plurality of R¹s may be identical to or different from each other,
when the a is 2 and adjacent R¹s are present, the two adjacent R¹s may form, together with carbon atoms to which each R¹ is bonded, a ring which may include an oxygen atom, a sulfur atom or a nitrogen atom, and the ring may further have a substituent,
when the b is 2 to 4, a plurality of R²s may be identical to or different from each other,
when the b is 2 to 4 and adjacent R²s are present, the two adjacent R²s may form, together with carbon atoms to which each R² is bonded, a ring which may include an oxygen atom, a sulfur atom or a nitrogen atom, and the ring may further have a substituent,
when neither the a nor the b is 0, at least one R¹ and at least one R² may form a ring, and the ring may further have a substituent,
R³ and R⁴ each independently represent a group bonded to the long chain group having a number average molecular weight of 300 to 10000, an aryl group optionally having a substituent or a heteroaryl group optionally having a substituent, and
at least one selected from R¹, R², R³ and R⁴ is a group bonded to the long chain group having a number average molecular weight of 300 to 10000.

2. The photochromic curable composition according to claim 1, wherein the naphthopyran represented by the formula (1) is indenonaphthopyran represented by formula (2) below: 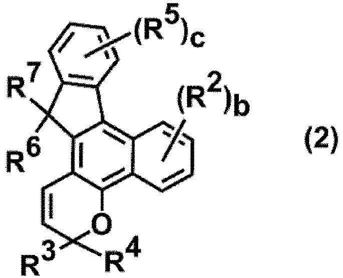 wherein,
R², R³, R⁴ and b are as defined in the formula (1),
R⁵ represents a group bonded to the long chain group having a number average molecular weight of 300 to 10000, a hydroxy group, an alkyl group, a haloalkyl group, a cycloalkyl group optionally having a substituent, an alkoxy group, an amino group, a substituted amino group, a heterocyclic group optionally having a substituent, a cyano group, a halogen atom, an alkylthio group, an arylthio group optionally having a substituent, a nitro group, a formyl group, a hydroxycarbonyl group, an alkylcarbonyl group, an alkoxycarbonyl group, an aralkyl group optionally having a substituent, an aralkoxy group optionally having a substituent, an aryloxy group optionally having a substituent, an aryl group optionally having a substituent, a heteroaryl group optionally having a substituent, a thiol group, an alkoxyalkylthio group, a haloalkylthio group or a cycloalkylthio group optionally having a substituent,
c represents an integer of 0 to 4,
when the c is 2 to 4, a plurality of R⁵s may be identical to or different from each other,
when the c is 2 to 4 and adjacent R⁵s are present, the two adjacent R⁵s may form, together with carbon atoms to which each R⁵ is bonded, a ring which may include an oxygen atom, a sulfur atom or a nitrogen atom, and the ring may further have a substituent,
R⁶ and R⁷ each independently represent a group bonded to the long chain group having a number average molecular weight of 300 to 10000, a hydrogen atom, a hydroxy group, an alkyl group, a haloalkyl group, a cycloalkyl group, an alkoxy group, an alkoxyalkyl group, a formyl group, a hydroxycarbonyl group, an alkylcarbonyl group, an alkoxycarbonyl group, a halogen atom, an aralkyl group optionally having a substituent, an aralkoxy group optionally having a substituent, an aryloxy group optionally having a substituent, an aryl group optionally having a substituent or a heterocyclic group optionally having a substituent,
R⁶ and R⁷ may form, together with a carbon atom at position 13 to which R⁶ and R⁷ are bonded, an aliphatic ring having 3 to 20 ring-member carbon atoms, a fused polycyclic ring in which an aromatic ring or an aromatic heterocycle is fused to the aliphatic ring, a heterocycle having 3 to 20 ring-member atoms or a fused polycyclic ring in which an aromatic ring or an aromatic heterocycle is fused to the heterocycle and
at least one selected from R², R³, R⁴, R⁵, R⁶ and R⁷ is a group bonded to the long chain group having a number average molecular weight of 300 to 10000.

3. The photochromic curable composition according to claim 2, wherein in the indenonaphthopyran represented by the formula (2),
R⁶ and R⁷ form, together with the carbon atom at position 13 to which R⁶ and R⁷ are bonded, the aliphatic ring having 3 to 20 ring-member carbon atoms, the fused polycyclic ring in which an aromatic ring or an aromatic heterocycle is fused to the aliphatic ring, the heterocycle having 3 to 20 ring-member atoms or the fused polycyclic ring in which an aromatic ring or an aromatic heterocycle is fused to the heterocycle, and the ring may have a substituent.

4. The photochromic curable composition according to claim 3, wherein in the indenonaphthopyran represented by the formula (2),
the aliphatic ring having 3 to 20 ring-member carbon atoms is selected from a cyclopentane ring, a cyclohexane ring, a cycloheptane ring, a cyclooctane ring, a cyclononane ring, a cyclodecane ring, a cycloundecane ring, a cyclododecane ring and a spirodicyclohexane ring, and
the aliphatic ring may have, as 1 to 10 substituents, an alkyl group having 1 to 3 carbon atoms, or a cycloalkyl group having 5 to 7 carbon atoms; or a cycloalkyl group having 5 to 7 carbon atoms may be fused to the aliphatic ring.

5. A photochromic optical article formed by polymerizing the photochromic curable composition according to any one of claims 1 to 4.
